# EUROPEAN PATENT SPECIFICATION

(11) **EP 3 662 263 B1**
(45) Date of publication and mention of the grant of the patent: **15.04.2026**
(21) Application number: 17751074.0
(22) Date of filing: 04.08.2017
(51) Int. Cl.: G01N 21/3586, G01N 21/88, G01N 21/89, G01N 21/84

(54) **NON-DESTRUCTIVE METHOD FOR DETECTING DEFECTS IN UNIDIRECTIONAL COMPOSITE INTERMEDIATE**
NICHT DESTRUKTIVES VERFAHREN ZUR ERFASSUNG VON FEHLERN IN UNIDIREKTIONALEM VERBUNDWERKSTOFF
PROCÉDÉ NON DESTRUCTIF POUR LA DÉTECTION DE DÉFAUTS DANS UN COMPOSITE UNIDIRECTIONNEL

(43) Date of publication of application: 10.06.2020
(73) Proprietor: TOYOTA JIDOSHA KABUSHIKI KAISHA, Toyota-Shi, Aichi-Ken 471-8571 (JP)
(72) Inventor: WILLETT, Andrew, 1140 Brussels (BE)
(74) Representative: Cabinet Beau de Loménie
(86) International application number: PCT/EP2017/069852
(87) International publication number: WO 2019/025011

(56) References cited:
- WO-A1-2007/082371
- WO-A1-2008/110017
- WO-A1-2009/052610
- OSPALD FRANK ET AL: "Aeronautics composite material inspection with a terahertz time-domain spectroscopy system", OPTICAL ENGINEERING, SOC. OF PHOTO-OPTICAL INSTRUMENTATION ENGINEERS, BELLINGHAM, vol. 53, no. 3, March 2014 (2014-03-01), pages 31208, XP060048377, ISSN: 0091-3286, [retrieved on 20131216], DOI: 10.1117/1.OE.53.3.031208
- OLE PETERS ET AL: "Determination of the Carbon Nanotube Concentration and Homogeneity in Resin Films by THz Spectroscopy and Imaging", JOURNAL OF INFRARED, MILLIMETER, AND TERAHERTZ WAVES, SPRINGER US, BOSTON, vol. 33, no. 12, 12 September 2012 (2012-09-12), pages 1221 - 1226, XP035136458, ISSN: 1866-6906, DOI: 10.1007/S10762-012-9935-5

## Description

### FIELD OF THE DISCLOSURE

The present disclosure is related to components comprising unidirectional continuous carbon fibres such as unidirectional dry carbon fibres and intermediate composite materials comprising unidirectional continuous carbon fibres embedded in a polymer matrix (thermoplastic or thermoset resin matrix) and more particularly to a non-destructive method for mapping the characteristics of such materials, and thereby evaluating the quality of the material and the processes steps used during fabrication of the material.

The present disclosure is also related to the transfer of characteristics obtained by this non-destructive method into physical properties (mechanical, thermal, electrical) for the purpose of simulation of parts and structures made from the inspected material or planned to made from the inspected material.

### BACKGROUND OF THE DISCLOSURE

In order to model the physical properties (mechanical, electrical, thermal) of a composite material or composite part, the constituent content of the material or part must be known. Knowledge of the constituent content is also required in order to evaluate the quality of a fabricated material or part, and the reliability of process steps used during fabrication of the material or part.

The constituent content refers both to the bulk amount and spatial distribution of reinforcement fibre, resin, voids, fillers, and binder materials.

Methods for determining the constituent contents are given in ISO 14127: 2008 (Carbon Fibre Reinforced Composites - Determination of the Resin, Fibre, and Void Contents), ASTM D3171-15 (Standard Test Methods for Constituent Content of Composite Materials), and ASTM D2734-16 (Standard Test Methods for Void Content of Reinforced Plastics).

The methods proposed in these standards for are destructive in nature in that a small sample is extracted from the material or part, and the resin is removed by combustion, ignition or chemical digestion.

Even within these standards substantial limitations for application exist depending on the exact resin system, fibre system, fillers and binders present in the composite. For example, some resin systems cannot be removed or cannot be removed without generation by-products that may in turn deposit on the fibres and corrupt the measurement.

In such cases, the methods for determining the constituent content are generally limited to destructive inspection of cut and polished cross-sections of the component. To this end, the composite material or part is sampled locally, i.e., a piece of the material or part is cut out and the cross-section of the piece is then embedded and polished and surface treatments to the polished cross-section are possibly applied. The sample is then observed under a microscope. Manual measurements or automated image processing of the cross-section may then be carried out to automatically identify the constituent content such as amount and distribution of fibre, resin, and voids.

However, all the above techniques are time consuming and are only representative of the local region inspected or tested. Moreover as the characterized region is destroyed, it can be challenging to establish a direct relationship between the constituent properties of the inspected sample and the physical properties of the material or part that one can only presume consists of similar material to that which has been inspected.

Beyond the constituent content other factors also influence the physical properties. These factors include the carbonization state of the fibre, existence of in-plane fibre waviness, out-of-plane fibre waviness, fibre damage, and resin damage.

The focus of the present disclosure is intermediate composite sheet or tape materials comprising unidirectional continuous carbon fibres embedded in a polymer matrix, and more particularly to a non-destructive method for mapping the characteristics of such materials. The present disclosure is also related to the transfer of characteristics obtained by this non-destructive method into physical properties (mechanical, thermal, electrical) of parts and structures made from the inspected material.

The fabrication route of such materials includes methods such as by melt impregnation, fluidized bed impregnation, reactive thermoplastic matrix impregnation for example. Prior to the impregnation step, the dry carbon fibres are pulled from bobbins, fed in tension and spread in order to ensure an even fibre distribution in the material and good impregnation of the polymer matrix. The spread fibres are then impregnated with resin (normally with heat and pressure) and subsequently cooled. The nominal carbon fibre volume content depends on the specific material and grade but may typically be between 30% and 70%. While this is not an exhaustive list the typical thermoplastic resin matrices of interest to the automotive industry include polypropylene (PP), polycarbonate (PC), polyamide (PA), polyphenylene sulphide (PPS), and polyphtalamide (PPA). Thermoset matrices of interest to the automotive industry include epoxy (EP) and polyurethane (PU).

Depending on the exact fabrication process applied and equipment used, the process output may either be a sheet or a tape. In the case of a sheet, it may further be slit into tapes. The width of tapes is typically 5 mm (millimetre) to 100 mm, but more commonly 12 mm to 50 mm. The width of sheet materials may be in the range of 100 mm to 500 mm. The thickness of both sheets and tapes is typically in the range of 0,05 mm to 0,3 mm. The materials are typically produced continuously in lengths of 250 m (metre) to 1000 m.

There are various routes for processing these materials into parts. The thermoplastic matrix tape materials normally have a thin resin surface layer. Almost all process routes applied to the tapes to convert them into parts utilize heating, pressure and subsequent cooling in order to bond this surface layer to other similar tapes or substrates containing a compatible resin system.

In the so-called tape placement process, heat and pressure are applied simultaneously to the tapes to be laminated. The heat source may be infrared, laser, hot gas, or ultrasonic. The pressure is typically applied using a solid metal roller or flexible plastic roller. Following the application of pressure a forced or non-forced cooling step is required to complete the joining process. Depending on the characteristics and quality of the process consolidation can be achieved in-situ without the need for further consolidation processes, for example heating and compressing in a press.

Tape winding processes are similar to the tape placement processes but the tape is wound on a rotating mandrel, liner or tool. Again the heat source may be infrared, laser, hot gas, ultrasonic. The pressure is typically applied using a roller. Following the application of pressure a forced or non-forced cooling step is required to complete the joining processes.

In the FiberForge process, the tapes are tacked locally to each other using ultrasonic horns in order to build up an unconsolidated web or laminate. This web or laminate is then consolidated in a press. The resulting consolidated laminate structure can be transformed into parts by a further compression thermoforming process.

Tapes, webs, laminates, and formed laminates can also be placed in an injection mold and overmolded with a compatible injection molding compound to form a hybrid composite that combines the properties of shape flexibility and strength where required.

Tapes can also be added to existing substrates (e.g. injection molded parts, or recycled chopped fibre polymer composite sheets) to locally reinforce them and impart substantial improvement in strength and stiffness in specific directions.

Due to the wide spectrum of possible processes, the usage of tape can range from minimal to intensive.

An intensive use application is for example in the case of a pressure vessel for high pressure gas storage. Such a tank is made by a combination of tape winding and tape placement and it may be necessary to build up a 10 mm to 30 mm thick layer of tape in order to achieve the necessary mechanical performance (for example in the range of 20 to 200 MPa (mega pascal) burst pressure). Such a pressure vessel may require several kilometres of tape material to make a single unit.

In pipeline applications which are also made by tape winding, it may be necessary to build both a thick wall and produce many kilometres of piping. Such a pipeline would require multiple kilometres of material.

In a minimal use application a single piece of tape or a few layers of tape may be applied locally to an object to tailor its performance to the profile of a specific user (for example a person's weight or strength) or use case or load case. Such applications may be realised be selective or local tape placement or overmolding. Even in such minimal use application for medium volume production (20 000 units/annum) to high volume production (100 000 units/annum), the total use of tape material can readily exceed 100 km (kilometre) or even 1000 km.

Variation of process parameters or random errors fluctuations of uncontrolled factors during the fabrication of a single 250 m to 1000 m length tape or sheet may occur that cause changes in the characteristics of the tape or sheet. In the case of sheet fabrication, variation may further occur across the width of the sheet and this may also then be reflected in the characteristics of any tape material extracted from the sheet by the slitting process. For example tapes extracted from the edge of a sheet may have different characteristics to those extracted from the centre of a sheet.

Any variations in the characteristics of the tape then interact with the subsequent processes applied to the tape in order to convert it into a part. For example, during a tape placement process, the tape is heated and subject to pressure and these excitations can cause splitting of the tape along relatively dry regions of the tape or resin rich regions of the tape. When such splitting occurs, the process may need to be stopped and the part disposed of. Certain characteristics therefore are related to increased risk of waste and process stoppages. In some cases, increased maintenance actions may also be required to untangle split material from the placement equipment.

Following the process to make the part, the characteristics of the tape become embedded in the part and thereby become the characteristics of the part. For example, a tape material that has a fibre content that is lower than the nominal fibre content quoted in a material specification/data sheet will clearly impart lower performance properties on a part than would be expected from a tape material that has the nominal fibre content. Any such variation in fibre content thereby leads to variation in the part properties that in turn require indulgent safety factors to be applied at design stage and more material usage than absolute necessary in order to assure safety in the worst case scenario. As these materials are relatively high cost/high value materials this can have a substantial cost impact that is either then transferred to the end user, or reduces possible expenditure on other parts, or results in the use of composite being abandoned.

Even within small scale process trials and development activity using the same lot of material, it can be difficult to explain some of the variance in properties obtained in test coupons. Even in this limited volume scenario the aforementioned standards (ASTM D2734-16, ASTM D3171-15, ISO 14127: 2008) and microtoming/optical microscopy are prohibitively time consuming. Moreover they are destructive so they cannot characterize the exact tape material that is passed through a processing machine or converted into a part.

Furthermore, the scope for using resin removal techniques described in standards ASTM D2734-16, ASTM D3171-15, and ISO14127:2008 are substantially limited for resin systems of interest to the automotive industry such as polyamide.

For this reason there is a substantial need for a non-destructive testing technique for characterizing composite materials comprising unidirectional continuous carbon fibres embedded in a thermoplastic (tape or sheet). The technique should not only be non-destructive but preferably non-contact, noncontaminating, induce no changes in the composite, and be broadly applicable irrespective of the polymer matrix.

The technique should not only give a single value for the characteristics but also be capable of delivering spatial distribution details of the fibre and resin. For example, to identify resin rich regions and carbon rich regions the variation in fibre content or resin content across a tape needs to resolved in spatial resolutions of the range 20 µm (micrometre) to 50 µm.

It is well known that various non-destructive testing techniques have been developed and established for composite materials and parts.

These testing techniques including X-ray, infrared thermography, ultrasonic, optical, high frequency eddy current, and THz technologies. Each of these methods as established at the current point in time have limitations with respect to the characterization unidirectional continuous carbon fibres embedded in a polymer matrix (tape or sheet) that render them unsuitable either from the perspective of spatial resolution or risk of contaminating or altering the material.

X-ray technology struggles to deliver contrast between the polymer matrix and the carbon fibre without the addition of doping elements in the polymer matrix which in turn can change the performance of the material.

The majority of ultrasonic inspection systems require water or gels to be used as a coupling media between the probe and the measured object. The coupling media used can cause changes to the polymer matrix and contamination to the surface that may inhibit further processes.

Non-contact and non-liquid coupled ultrasonic techniques such as laser ultrasound and air-coupled ultrasound have some success for defect detection but not so far for constituent analysis.

In particular, Peter Fey et al. (19th World Conference on Non-Destructive Testing 2016, Methods for Characterizing Unidirectional Composite Material and Composite Products) have presented a development phase air coupled ultrasound system for testing of tapes. At the current state of development a correlation between the ultrasound signal and good and bad fibre content had been achieved but no quantitative correlation. Furthermore, the resolution that may be achieved by such systems cannot be expected to reach higher resolution targets such as 20 µm to 50 µm.

Thermography requires the introduction of a thermal excitation. For unidirectional continuous carbon fibres embedded in a thermoplastic or thermoset resin matrix, depending on the specific matrix material the introduction of a thermal excitation may not be desirable.

Furthermore, if the thermography technique is applied in series/inline with other thermal processes for example after the impregnation process then there will already exist a dynamic thermal state in the material that may be difficult to differentiate from any applied excitation. It would also be preferred not to interrupt a process dependent on heating and cooling cycles with an additional thermal excitation for inspection.

In the case of inspecting the material prior to a process that converts the tape into a part (for example the aforementioned tape placement or tape winding processes) then a thermography technique would raise locally the temperature of the material. The layup system would then need to compensate that rise in temperature when applying its own power for heating and consolidation.

Eddy current techniques can deliver impressive results for the carbon fibre content and commercial solutions are available from companies such a Surgaus GmbH (Dresden, Germany). One major benefit of such inspection techniques is that they cause no contamination of the composite and no thermal excitation is required. The spatial resolution that can be obtained is however limited by the physical constraints for the coil type probe design. This does not allow the inspection system to resolve characteristics in the range 20 µm - 50 µm.

For characterization of some unidirectional composite intermediates materials, such as glass fibre reinforced systems, it is possible to make an optical inspection, passing for example white light or specific wavelengths through the main plane of the tape and detecting it on the other side. In the case of carbon fibre based systems the measuring technique can only be used to identify gross gaps in the material before the impregnation step. The approach cannot be used to give constituent properties such as amount of fibre.

Theuer et al. (XXIXth URSE General Assembly, August 7-16, 2008, THz Imaging and Spectroscopy for Non-Destructive Testing), at research laboratory scale, have used THz time domain spectroscopy for measurement of the thickness of polymer layers without fibres down to accuracies of 10 µm. Rutz et al. (Int. J. Infrared and Millimeter Waves, 2007, Vol. 27(4), pp 547-556), Stoik et al. (Opt Express, 2008, Oct. 13, 16(21), 17039-51) and Ospald et al. (Opt. Eng., 53(3), 031208 - Dec. 16, 2013) have used THz time domain spectroscopy for identification of characteristics and defects in glass fibre composites.

The international academic consensus, illustrated by Amenabar et al. (J. Infrared, Millimeter and Terahertz Waves, (2013) 34, pp 152-169), is that THz inspection struggles to be effective for carbon fibre composites to the extent that the general international academic consensus is that carbon fibre composites are reflective for THz waves. This is also corroborated by commercial vendors of THz inspection systems, such as Becker et al. (3rd Terahertz: Opportunities for Industry, February 3-5, 2015, NDT Applications of All-Electronic 3D Terahertz Imaging).

It is known that the degree of transmission of THz in carbon fibre composite is dependent on the polarization direction relative to the axis of the carbon fibres. In a recent European Commission funded Framework 7 project (DOTNAC), Ospald et al. (Opt. Eng., 53(3), 031208 - Dec. 16, 2013) have noted that for a unidirectional carbon fibre composite panel the THz transmission is only 1,2% of the incident amplitude when the polarization in perpendicular to the carbon fibre axis and 0,11% when the polarization is parallel to the carbon fibre axis. Im et al. (Advances in Materials Science and Engineering, Volume 2013, Article ID 563962 and AIP Conference Proceedings 1430, 1190 (2012)) have shown that this provokes strong problems when measuring multi-directional materials.

However, these THz measurement attempts were largely based around end-user needs for part inspection (composite parts typically having multiple directions of fibres and substantial thickness more than 1 mm) and not inspection of the intermediate material such as composite materials comprising unidirectional continuous carbon fibres embedded in a thermoplastic or thermoset resin matrix in the form of sheet or tapes with thickness in the range 0,05 mm to 0,3 mm.

At industrial level, WO2009052610 discloses an apparatus for determining fibre orientation parameters of a sheet of material during a production process for paper using THz radiations.

WO2007082371 also discloses a method for evaluating the average orientations of fibres in a composite fibrous material using THz radiations, again primarily focussing on cellulose fibres in the paper making industry.

WO2007082371 claims also to be of use for determining the orientation of carbon fibre materials. In such a case, use is made of the minor differences in the transmission that occur on changing the polarization angle relative to the fibres.

Both WO2009052610 and WO2007082371 are mute to the derivation of constituent content such as the amount of carbon fibre and amount of resin in a component comprising unidirectional continuous carbon fibres.

Compared to eddy current inspection system, optically excited THz microprobes have the possibility to make measurements with spatial resolution even less than 5 µm - which would satisfy the spatial resolution range of interest for unidirectional continuous carbon fibres embedded in a thermoplastic or thermoset resin matrix in the form of sheet or tapes.

However, as THz inspection struggles to be effective for carbon fibre composites to the extent that the general international academic consensus is that carbon fibre composites are reflective for THz waves, such technique is not considered as a promising technique for components comprising unidirectional continuous carbon fibres. WO2008/110017 A1 describes methods and apparatus for characterizing wood, wood products, or similar materials, such as OSB, particle board, plywood, wood chips, paper, cardboard, fibreglass, carbon fibre composites and solid wood. In particular, WO2008/110017 A1 describes determining a range of material qualities including average fibre orientation and/ or density based on measuring how the samples of the materials interact with THz radiation.

Thus, at present, components comprising unidirectional continuous carbon fibres are difficult to characterise. In general, defects present in such components comprising unidirectional continuous carbon fibres are difficult to detect without destroying the component itself. Defects may be resin rich regions, fibre rich regions, voids and/or splits.

### SUMMARY OF THE DISCLOSURE

Currently, it remains desirable to provide a non-destructive method for characterising a component comprising unidirectional continuous carbon fibres.

Therefore, according to embodiments of the present disclosure, a non-destructive method, according to claim 1, is provided for characterising a component comprising unidirectional continuous carbon fibres having a main x-y plane, the continuous carbon fibres being oriented along the x-axis, the component being a unidirectional intermediate composite having unidirectional continuous carbon fibres embedded in a thermoplastic or thermoset resin matrix. The method comprises
a) triggering an ultra-short laser pulse for triggering an emitter to emit, along a z-axis, which is perpendicular to the main x-y plane, broadband electromagnetic terahertz radiations having a single polarization state along the y-axis, the polarization state of the radiation being perpendicular to the main fibre axis;
b) passing the broadband electromagnetic radiations through the main x-y plane of the component at a given location in the main x-y plane of the component;
c) triggering a microprobe with the ultra-short laser pulse, one of the emitter or the microprobe receiving the ultra-short laser pulse having passed through a time delay stage at a position of the time delay stage, and measuring the broadband electromagnetic terahertz radiations that has passed through the component using the microprobe, the microprobe being fixed in the x-y plane relative to the emitter;
d) storing the measured broadband electromagnetic terahertz radiations, the coordinates of the given location and the time delay stage position in a first file;
e) modifying the time delay stage position and repeating steps a) through d) so as to measure the broadband electromagnetic terahertz radiations in function of time at the given location;
f) comparing the measured broadband electromagnetic terahertz radiations in function of time to a database of broadband electromagnetic terahertz radiations in function of time;
g) retrieving a value of at least one parameter indicative of a carbon content of the component from the database based on the broadband electromagnetic terahertz radiations in function of time; and
h) storing the retrieved value of the parameter indicative of the carbon content of the component and the given location in a second file,

wherein the parameter indicative of the carbon content includes at least an amount of resin and an amount of carbon;
wherein the non-destructive method further comprises using a surface acoustic wave measurement system for surface acoustic wave measurements of the component for determining a void content of the component based on the amount of resin and the amount of carbon.

By component comprising unidirectional continuous carbon fibres, component comprising carbon fibres oriented in one direction is intended. The carbon fibres may be at least several meters long. However, all the carbon fibres are not necessarily all strictly parallel to each other. The carbon fibres of the component may exhibit a certain degree of waviness. The carbon fibres in the component are not entangled with each other, in the sense that the carbon fibres are not braided and the carbon fibres extend predominantly along the x-direction. Component comprising unidirectional continuous carbon fibres may also encompass components comprising carbon fibres having a length equal to or larger than 15 mm, the length being important compared to the diameter of the carbon fibres, which is equal to or smaller than 10 µm. These fibres may be interlocked. With such component, the broadband electromagnetic terahertz radiations measured will be less accurate, but average carbon fibre content may be derived from the non-destructive method, the fibres being considered continuous in the sense of the present disclosure.

The width of tapes is typically 5 mm (millimetre) to 100 mm, but more commonly 12 mm to 50 mm. The width of sheet materials may be in the range of 100 mm to 500 mm. The thickness of both sheets and tapes is typically in the range of 0,05 mm to 0,3 mm. The materials are typically produced continuously in lengths of 250 m (metre) to 1000 m.

Terahertz (THz) are considered to be radiations having a wavelength comprised between 0,02 - 5 THz.

Thanks to the above method, it is possible without destroying a component to obtain information related to the carbon content of the component.

In some embodiments, before step e) the emitter and the component are displaced relative to one another by a given pitch, the broadband electromagnetic terahertz radiation passing through the main x-y plane of the component at another given location in the main x-y plane of the component.

It is therefore possible to measure broadband electromagnetic terahertz radiations along lines in the y-direction, i.e., in the width direction of the component, at different given locations before passing to another time delay stage position and measuring, along the same line, the broadband electromagnetic terahertz radiations at that given time delay stage position.

The time delay stage may be disposed either before the emitter or before the microprobe, so as to create a time delay between the ultra-short laser pulse triggering the emitter and the microprobe.

Although the measurements are carried out on a cross-section of the component (along lines in the y-direction), the values are given in vol% instead of surface percentage (srf%). Indeed, the carbon fibres are continuous and it is assumed that the average carbon fibre content is constant in a small section along the x-direction of the component.

In some embodiments, after step h) the emitter and the component are displaced relative to one another by a given pitch, the broadband electromagnetic terahertz radiation passing through the main x-y plane of the component at another given location in the main x-y plane of the component.

It is therefore possible to measure successive lines in the x-direction.

In some embodiments, the pitch in the y-direction is equal to or greater than 20 µm and is equal to or smaller than 100 µm.

In some embodiments, the method comprises measuring the coordinates x, y, z of one surface of the component, storing these coordinates so as to maintain a constant distance between the surface of the component and the microprobe.

It is also possible to maintain the distance between the microprobe and the emitter constant.

It is also possible to determine the cross-section of the component along a measurement line and calculate the volume fraction of the carbon fibres and/or the volume fraction of the resin matrix at that given cross-section more precisely than when taking the overall general dimensions of the component, i.e. nominal width and nominal thickness.

It is also possible to determine the presence of a resin rich layer on the periphery of the component and to determine the distance between the surface of the component and the first carbon fibres in the component. Thus, the volume fraction of resin in the carbon fibres region of the component may be determined.

In some embodiments, comparing the measured broadband electromagnetic terahertz radiations in function of time to the database of broadband electromagnetic terahertz radiations in function of time comprises comparing a value of time delay of a given signal amplitude of the broadband electromagnetic terahertz radiations in function of time.

It is therefore possible to reduce the comparison time and/or the overall measurement time.

According to claim 1, the component is a unidirectional intermediate composite having unidirectional continuous carbon fibres embedded in a thermoplastic or thermoset resin matrix.

Examples of thermoplastic resin matrices include, but are not limited to, polypropylene (PP), polycarbonate (PC), polyamide (PA) such as polyamide 6 (PA6), polyphenylene sulphide (PPS), polypthalamide (PPA), polyaryletherketone (PAEK) such as polyether ether ketone (PEEK), and high density polyethylene (HDPE). Examples of thermoset resin matrices include, but are not limited to, epoxy (EP) and polyurethane (PU).

According to claim 1, the parameter indicative of the carbon content includes an amount of resin and an amount of carbon. In some embodiments, the parameter indicative of the carbon content further includes a number of carbon fibres.

The amount of carbon or carbon content is for example the volume fraction expressed in volume percent (vol%) of the carbon fibres. The amount of resin or resin content is for example the volume fraction expressed in volume percent (vol%) of the resin matrix.

The amount of carbon and/or the amount of resin may be obtained when the cross-section of the component is known. The cross-section may be approximated using the nominal values of the width and the thickness of the component or by determining locally, by optical measurement for example, the cross-section of the component.

According to claim 1, the method comprises a surface acoustic wave measurement system for surface acoustic wave measurements of the component for determining a void content of the component.

When the amount of carbon and the amount of resin is known, by detecting deviations of the acoustic waves compared to expected acoustic waves, it is possible to determine the void content of the component.

In some embodiments, the method comprises building a map of the retrieved values of the parameter indicative of the carbon content as a function of the given locations of the component.

In some embodiments, the method comprises applying simplification rules to the map of the retrieved values of the parameter indicative of the carbon content, so as to obtain a simplified map of the retrieved values of the parameter indicative of the carbon content.

For example, measurements may be carried out with a given pitch and the area around each measured point may be averaged to the retrieved values of the parameter indicative of the carbon content, i.e. a "slice" of material centred around the measured point is considered having the same properties as the measured point. As another example, the retrieved values of the parameter indicative of the carbon content may be averaged across an entire width of the tape, which would be representative of all the measured points along the width of the tape. As yet another example, a series of adjacent lines may be measured and general statistics may be generated for the region including the average fibre content over a given length of the tape and a single generalized parameter for in-plane waviness over the same given length of the tape.

In some embodiments, the method comprises building the database by:
- correlating measured broadband electromagnetic terahertz radiations in function of time with a measured value of a parameter on cross-sectional microscopy images of a first plurality of samples;
- storing in the database the measured values of the parameter as a function of measured broadband electromagnetic terahertz radiations in function of time.

It allows building up the database for a given component. The database may be used later for components of the same composition (nominal carbon fibre content, nominal thickness, etc.).

In some embodiments, the method comprises improving the database by:
- comparing the generated map of the retrieved values of the parameter indicative of the carbon content with measured values of the parameter on cross-sectional microscopy images of a second plurality of samples;
- storing in the database the measured values of the parameter as a function of measured broadband electromagnetic terahertz radiations in function of time; and
- repeating the two previous steps until a deviation between the generated map of the retrieved values of the parameter indicative of the carbon content and the measured values of the parameter on cross-sectional microscopy images of the second plurality of samples is equal to or smaller than 15% at each given location.

In some embodiments, the parameter measured on cross-sectional microscopy images is a number of fibres, a total amount of fibre in volume %, an amount of resin in volume %.

In some embodiments, the map is obtained for a complete spool of the unidirectional dry carbon fibre tow or the unidirectional intermediate composite having unidirectional continuous carbon fibres embedded in a thermoplastic or thermoset resin matrix, information related to the map being stored in a device located on the spool and/or on the component.

Therefore, when the component on the spool is used, it is possible to keep a track of the retrieved parameter as a function of the location on the component. The map may be stored in the component, i.e., on the spool itself, or the information stored in the component on the spool may refer to an external data source in which the map is stored.

In some embodiments, the time delay stage position pitch may be equal to or greater than 2 µm, preferably equal to or greater than 5 µm, and equal to or smaller than 50 µm, preferably equal to or smaller than 20 µm.

According to embodiments of the present disclosure, a method for the determination of a plurality of values of a physical property of a component, for the fabrication process of a composite part with the component is provided, the component comprises unidirectional continuous carbon fibres having a main x-y plane, the continuous carbon fibres being oriented along the x-axis, and the simulation method uses the map of retrieved values of a parameter indicative of the carbon content defined previously and a plurality of parameters of the fabrication process to determine the value of the physical property of the component at the end of the fabrication process at a given location of the component, each value being compared to a threshold value and a warning signal being returned when the threshold value is reached.

According to embodiments of the present disclosure, a method for determining a physical property of a composite material or composite part made from a component comprising unidirectional continuous carbon fibres having a main x-y plane is provided, the continuous carbon fibres being oriented along the x-axis, the method comprising building a map of retrieved values of a parameter indicative of a carbon content defined previously, the physical property being dependent upon the parameter indicative of a carbon content.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Fig. 1 shows a schematic perspective view of a device for carrying out a method according to embodiments of the present disclosure;
Fig. 2 shows a first flow chart of the method according to embodiments of the present disclosure;
Fig. 3 shows a second flow chart of the method according to embodiments of the present disclosure;
Fig. 4 shows a partial cross-section image taken with a microscope of Sample 1;
Fig. 5 shows a graph of the number of carbon fibres (vertical axis) as a function of the width (in µm - horizontal axis) for Sample 1;
Fig. 6 shows a partial cross-section image taken with a microscope of Sample 2;
Fig. 7 shows a graph of the number of carbon fibres (vertical axis) as a function of the width (in µm - horizontal axis) for Sample 2;
Fig. 8 shows a partial cross-section image taken with a microscope of Sample 3;
Fig. 9 shows a graph of the number of carbon fibres (vertical axis) as a function of the width (in µm - horizontal axis) for Sample 3;
Figs. 10 and 11 show terahertz measurement results along two different lines for Sample 1, the amplitude of the measured broadband electromagnetic terahertz radiation (in arbitrary unit - level of grey) being represented at different time delay stage positions (vertical axis) as function of the y position (in mm - horizontal axis) on a given line in the y-direction of Sample 1;
Fig. 12 shows a graph of the amplitude of the measured broadband electromagnetic terahertz radiation (in arbitrary unit - vertical axis) as a function of the time delay stage position (in mm - horizontal axis) for different given locations on Sample 1;
Figs. 13 and 14 show terahertz measurement results along two different lines for Sample 2, the amplitude of the measured broadband electromagnetic terahertz radiation (in arbitrary unit- level of grey) being represented at different time delay stage positions (vertical axis) as function of the y position (in mm - horizontal axis) on a given line in the y-direction of Sample 2;
Fig. 15 shows a graph of the amplitude of the measured broadband electromagnetic terahertz radiation (in arbitrary unit - vertical axis) as a function of the time delay stage position (in mm - horizontal axis) for different given locations on Sample 2;
Figs. 16 and 17 show terahertz measurement results along two different lines for Sample 2, the amplitude of the measured broadband electromagnetic terahertz radiation (in arbitrary unit - level of grey) being represented at different time delay stage positions (vertical axis) as function of the y position (in mm - horizontal axis) on a given line in the y-direction of Sample 3;
Fig. 18 shows a graph of the amplitude of the measured broadband electromagnetic terahertz radiation (in arbitrary unit - vertical axis) as a function of the time delay stage position (in mm - horizontal axis) for different given locations on Sample 3
Fig. 19 shows a composite part made from a component;
Fig. 20 shows a simplified map of the retrieved values of the parameter.

### DESCRIPTION OF THE EMBODIMENTS

While the invention is defined in appended claims, reference will now be made in detail to exemplary embodiments of the disclosure, examples of which are illustrated in the accompanying drawings. Wherever possible, the same reference numbers will be used throughout the drawings to refer to the same or like parts.

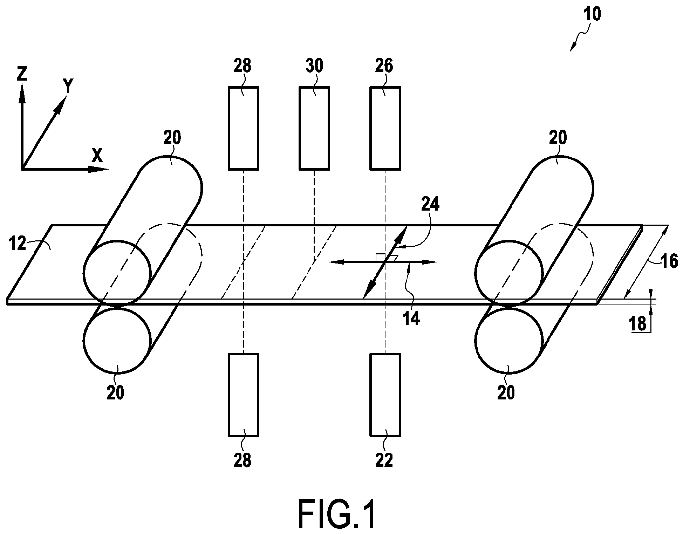

Fig. 1 shows a schematic perspective view of a device 10 for carrying out a method according to embodiments of the present disclosure.

The device 10 allows carrying out a non-destructive method for characterising a component 12 comprising unidirectional continuous carbon fibres. The component 12 may be a unidirectional dry carbon fibre tow or a unidirectional intermediate composite having unidirectional continuous carbon fibres embedded in a thermoplastic or thermoset resin matrix.

In the following description, references will be made to x, y and z-axis, x, y, z directions and x-y plane. These axis/directions and plane are defined relative to the main plane of the component 12, x-axis is parallel to the carbon fibres, which direction is represented by the dashed arrow 14, y-axis is perpendicular to the x-axis and defines, with the x-axis, the x-y plane of the component, z-axis is perpendicular to the x-y plane. Therefore, the x-axis defines to the length of the component 12, the y-axis defines the width 16 of the component 12 and the z-axis defines the thickness 18 of the component 12.

The device 10 comprises fixation parts 20 that maintain the component 12 flat and in tension in the area of measurement. In the exemplary embodiment of Fig. 1, the fixation parts 20 are represented as rolls.

The device 10 comprises an emitter 22 disposed, in Fig. 1, below the component 12, which may emit, along the z-axis, broadband electromagnetic terahertz radiations having a single polarization state along the y-axis, represented by the solid arrow 24.

The device 10 comprises a microprobe 26 for measuring the broadband electromagnetic terahertz radiations that has passed through the component 12. The microprobe 26 is fixed in the x-y plane relative to the emitter 22 and the microprobe 26 is arranged on the other side the component 12 relative to the emitter 22, i.e., the emitter 22 and the microprobe 26 are arranged on opposite sides of the component 12 and aligned with each other in the z direction.

The device 10 may comprise a part for measuring the z-position of the component 12. For example, the part may be an optical measurement system 28. In Fig. 1, two optical measurement systems 28 have been represented, one on each side of the component 12. However, the device 10 may also comprise only one optical measurement system 28, preferably on the microprobe side of the component 12. The device 10 may also comprise an acoustic wave measurement system 30. The optical measurement system 28 and the acoustic wave measurement system 30 may or may not be present, depending upon the measurements to be carried out on the component 12.

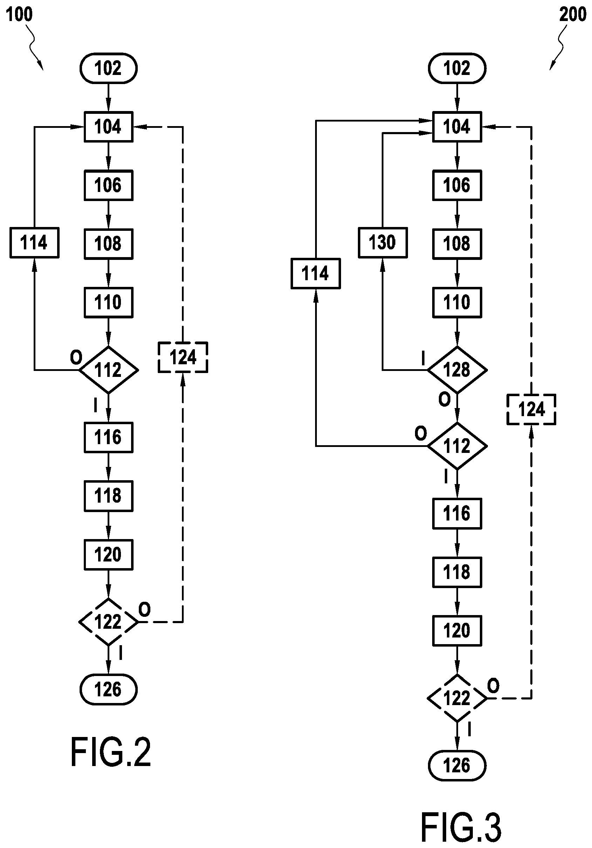

A non-destructive method 100 for characterising a component comprising unidirectional continuous carbon fibres using the device 10 will be described in reference to Fig. 2. The non-destructive method 100 starts at step 102.

The component 12 is placed between the fixation parts 20, that maintain the component 12 fixed relative to the z-direction. The emitter 22 and the microprobe 26 are arranged on opposite sides of the component 12. In other words, the emitter 22 and the microprobe 26 are disposed facing each other, i.e., having the same x, y coordinates, the component 12 being located between the emitter 22 and the microprobe 26.

In this example, the emitter 22 is an optically excited polarizable broadband electromagnetic radiation emitter which is connected to a laser source (not shown), for example a femtosecond laser.

In step 104, when the femtosecond laser is triggered, it emits an ultra-short pulse that is routed through a time delay stage at a first position of the time delay stage. The laser pulse having passed through the time delay stage triggers the emitter 22 that emits, along the z-axis, which is perpendicular to the main x-y plane, broadband electromagnetic terahertz radiations having a single polarization state along the y-axis, represented by the solid arrow 24.

In step 106, the broadband electromagnetic radiation is passed through the main x-y plane of the component 12 at a given location in the main x-y plane of the component 12, i.e., at given x, y coordinates.

In step 108, the microprobe 26, which is in this example an optically triggered electromagnetic radiation microprobe, is triggered by the ultra-short laser pulse, the ultra-short laser pulse being the same as the one triggering the emitter 22 but without passing through the time delay stage. The microprobe 26 measures the broadband electromagnetic terahertz radiations that have passed through the component 12, i.e., the broadband electromagnetic terahertz radiations are emitted from one side of the component 12, pass through the component 12 and are detected and measured on the opposite side of the component 12.

Alternatively, in step 104, the femtosecond laser is triggered and emits an ultra-short pulse that triggers the emitter 22 without passing through a time delay stage and the ultra-short pulse is routed through a time delay stage at a first position of the time delay stage before triggering the microprobe 26 in step 108.

In step 110, the broadband electromagnetic terahertz radiations measured in step 108, the coordinate of the given location and the time delay stage position are stored in a first file.

In step 112, a test is performed. The test consists in assessing whether the measurements at the given location are completed.

When the answer is "no" ("O" in Fig. 2), the non-destructive method 100 proceeds to step 114, in which the time delay stage position of the time delay stage is modified.

After step 114, the non-destructive method 100 starts again at step 104 and carry on to the test step 112.

Repeating steps 104 to 110 at different time delay stage positions allows for measuring the broadband electromagnetic terahertz radiations that has passed through the component 12 at the given location in function of time. Indeed, by assembling the measured broadband electromagnetic terahertz radiation at a given location as a function of the time delay stage positions, one obtains the measured broadband electromagnetic terahertz radiation in function of time at the given location.

For example, steps 104 to 110 may be carried out 10 times with a time delay stage position pitch of 10 µm, the 10 measurement taking approximately an overall time of 0,3 s (second).

When the answer to the test in step 112 is "yes" ("I" in Fig. 2), the non-destructive method 100 proceeds to step 116, in which the measured broadband electromagnetic terahertz radiations in function of time is compared to a database of broadband electromagnetic terahertz radiations in function of time.

In step 118, a value of at least one parameter indicative of a carbon content of the component 12 is retrieved from the database, based on the broadband electromagnetic terahertz radiations in function of time.

Examples of parameters indicative of a carbon content of the component 12 are an amount of resin, a number of carbon fibres, and an amount of carbon.

In step 120, the retrieved value of the parameter indicative of a carbon content of the component 12 and the given location of the measurement are stored in a second file.

In step 122, a test is performed. The test consists in assessing whether the measurements on the component 12 are completed.

When the answer is "yes" ("I" in Fig. 2), the non-destructive method 100 proceeds to step 126, which is the end of the non-destructive method.

When the answer is "no" ("O" in Fig. 2), the non-destructive method 100 proceeds to step 124, in which the location in the x-y plane of the emitter 22 is modified relative to the component 12 by a given pitch, as the microprobe 26 is fixed in the x-y plane relative to the emitter 22, the location in the x-y plane of the microprobe 26 is modified relative to the component 12 by the same given pitch in the same direction as the direction of the emitter 22, so that broadband electromagnetic terahertz radiation is passing through the main x-y plane of the component 12 at another given location in the main x-y plane of the component 12.

After step 124, the non-destructive method 100 starts again at step 104 and carry on to the test step 122.

When steps 116 to 120 are only carried out once, the non-destructive method 100 allows for measuring the broadband electromagnetic terahertz radiations in function of time of one given location in the main x-y plane of the component 12.

Going through step 124 allows for carrying out measurements of the broadband electromagnetic terahertz radiations in function of time of multiple given locations in the main x-y plane of the component 12.

Fig. 3 shows a non-destructive method 200, which only differs of the non-destructive method 100 of Fig. 2, in that, between the step 110 and the test step 112, i.e., before the modification of the time delay stage position, a test step 128 takes place.

In step 128, a test is performed. The test consists in assessing whether measurements at other given locations in the main x-y plane of the component 12 are to be carried on.

When the answer is "yes" ("I" in Fig. 2), the non-destructive method 100 proceeds to step 130, in which the location in the x-y plane of the emitter 22 is modified relative to the component 12 by a given pitch, as the microprobe 26 is fixed in the x-y plane relative to the emitter 22, the location in the x-y plane of the microprobe 26 is modified relative to the component 12 by the same given pitch in the same direction as the direction of the emitter 22, so that broadband electromagnetic terahertz radiation is passing through the main x-y plane of the component 12 at another given location in the main x-y plane of the component 12.

Step 130 allows for measuring the broadband electromagnetic terahertz radiation passing through the main x-y plane of the component 12 at different given locations for a given time delay stage position.

When the answer is "no" ("O" in Fig. 2), the non-destructive method 100 proceeds to step 112 and the broadband electromagnetic terahertz radiation passing through the main x-y plane of the component 12 at different given locations are measured for a different time delay stage position.

For example, measurement of the broadband electromagnetic terahertz radiation passing through the main x-y plane of the component 12 along a line in the y-direction may be carried out at a given time delay stage position. Then, the time delay stage position is modified in step 114 and the broadband electromagnetic terahertz radiation passing through the main x-y plane of the component 12 along the same line in the y-direction at each location.

Once the measurements of the broadband electromagnetic terahertz radiation passing through the main x-y plane of the component 12 at different time delay stage positions are sufficient to obtain broadband electromagnetic terahertz radiations in function of time along the line in y-direction, the non-destructive method 200 proceeds to step 116.

For example, the pitch in the y-direction may be equal to or greater than 20 µm and may be equal to or smaller than 100 µm. For a 12 mm width component 12, with a pitch of 30 µm in the y-direction, there are 400 measurements of the broadband electromagnetic terahertz radiation for one line in the y-direction. These 400 measurements are repeated at different time delay stage positions. For 10 different time delay stage positions, the measurements along one line in the y-direction of the component 12 may take up to 2 minutes.

Depending on the component 12, the measurements may be carried out every meter in the x-direction (step 124), or every 100 m, or any other convenient pattern.

When the device 10 comprises a part for measuring the z-position of the component 12, such as an optical measurement system 28, disposed on the same side of the main x-y plane of the component 12 as the microprobe 26, the coordinates (x, y, z), i.e., the surface of the component 12 on the microprobe side of the component, may be measured. In particular, the coordinates of the points corresponding to the given locations in which the broadband electromagnetic terahertz radiations in function of time are to be measured are of interest. The measurements of the coordinates (x, y, z) need not be exactly at the given locations where the broadband electromagnetic terahertz radiations in function of time are to be measured. However, it is preferable that the measurements of the coordinates (x, y, z) be as close as possible to the given locations where the broadband electromagnetic terahertz radiations in function of time are to be measured.

With the z coordinate, the device 10 adjusts the z-distance between the microprobe 26 and the surface of the component 12, so that the distance in the z-direction between the microprobe 26 and the surface of the component 12 is constant during the measurements. The device also adjusts the z-distance between the emitter 22 and the microprobe 26, so that the distance in the z-direction between the emitter 22 and the microprobe 26 is constant during the measurements

When the device 10 comprises a part for measuring the z-position of the component 12, such as an optical measurement system 28, disposed on the same side of the main x-y plane of the component 12 as the emitter 22, the coordinates (x, y, z), i.e., the surface of the component 12 on the emitter side of the component, may be measured. In particular, the coordinates of the points corresponding to the given locations in which the broadband electromagnetic terahertz radiations in function of time are to be measured are measured.

Measurements of the surfaces on both side of the component 12 along a line in the y-direction at the same x-position, may allow building up a cross-sectional geometry of the composite 12 at that given x-position.

Other optical measurement systems 28 may provide a cross-sectional geometry of the composite 12 at a given x-position.

Other optical measurement systems 28 such as an optical coherence tomography allow acquiring the surface position and the z-position of the first subsurface fibre layer relative to the surface of the component 12.

These additional data may be used to further enhance the analysis of the component 12.

In particular, knowing the number of carbon fibres or the amount of carbon, for example in vol% (volume percent), along a line in the y-direction in the composite 12, it is possible to estimate the resin content, for example in vol%, of the cross-sectional geometry of the composite 12 at a given x-position.

The cross-sectional geometry of the composite 12 may be taken as a general overall geometry of the composite 12 or the cross-sectional geometry of the composite 12 may be measured by the optical measurement system 28. The latter method gives more precise results.

Moreover, when using the optical coherence tomography and when the component 12 has a resin rich layer, it is possible to determine the amount of resin close to the surface of the component 12 and therefore estimate the amount of resin in the fibre rich region of the component 12.

When the thickness of the component 12 may vary of a value equal to or greater than 50 µm, the optical measurement may prove useful as such variation in the thickness of the component 12 may influence the broadband electromagnetic terahertz radiations passing through the component 12. For changes in thickness smaller than 50 µm, it is considered that the changes in the broadband electromagnetic terahertz radiations due to the changes in thickness of the components are negligible compared to the changes in the broadband electromagnetic terahertz radiations due to the presence of carbon fibres.

The device 10 may also comprise a surface wave measurement system 30. The void content, for example in vol%, of the void may be determined in the component 12.

Indeed, based on the carbon fibre content and the resin content of the component 12, it is possible to identify deviations from the ideal wave velocity for that given carbon fibre content and the resin content, and estimate the void content of the component 12.

The non-destructive method may also comprise additional steps, after the measurement steps.

For example, the non-destructive method may comprise a step in which a map of the retrieved values of the parameter is built as a function of the given locations of the component 12.

A simplified map of the retrieved values of the parameter may be obtained by applying simplification rules.

The measurements may be carried out on a spool, the component 12 being unwound from the spool for measurement and wound on another spool. Alternatively, the measurements may be carried out during the fabrication process of a composite part and as during the measurements the component may be immobilized, the equipment for fabricating the composite part will comprise parts that allow to keep the component 12 under tension and to be disposed on a support for making the composite part while still allowing some parts of the component 12 to be static so as to be able to carry out the measurements.

The non-destructive method may also include for each type of component to be characterized, i.e., for different couples carbon fibres/resin matrix having a given amount of fibres, a process of building up the database by correlating measured broadband electromagnetic terahertz radiations with a measured value of a parameter on cross-sectional microscopy images of a first plurality of samples and storing in the database the measured values of the parameter as a function of measured broadband electromagnetic terahertz radiations.

For example, samples of component 12 are placed in the device 10 and the broadband electromagnetic terahertz radiations in function of time are measured along plurality of lines in the y-direction. Then, the sample of component 12 is cut at the locations of the lines and the cross-sections are studied using a microscope.

### Sample 1

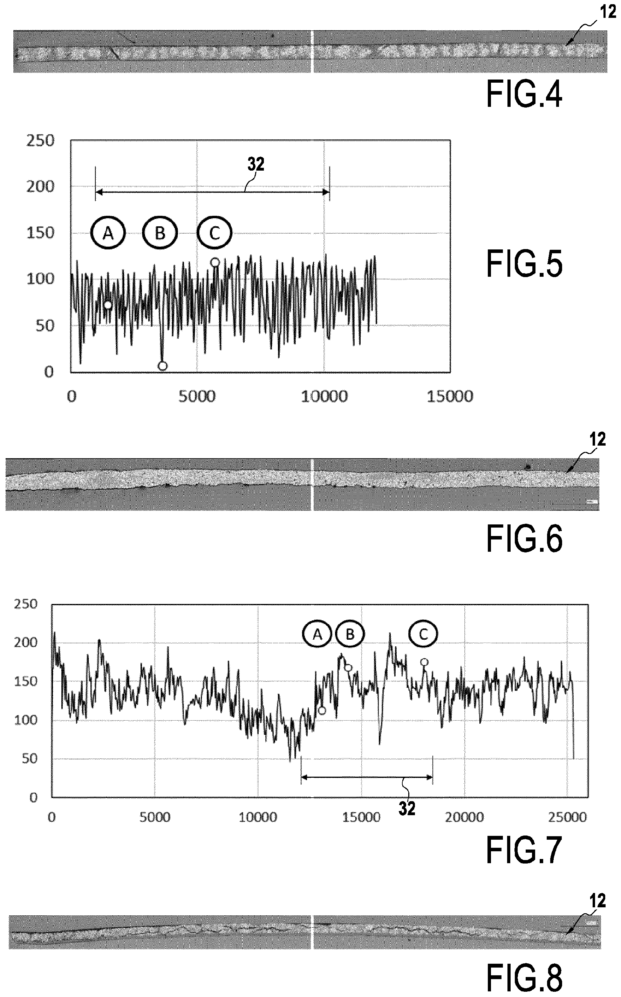

Sample 1 is a component comprising unidirectional continuous carbon fibres embedded in a polycaprolactam thermoplastic resin matrix, also referred to as polyamide 6, PA6 or Nylon 6. Sample 1 has a nominal 50 vol% of carbon fibres having an average diameter of 5,5 µm with a sample standard deviation of 0,18 µm, a width of 12 mm and a thickness of 0,15 mm. Fig. 4 shows a partial cross-section image taken with a microscope of Sample 1.

As can be seen from Fig. 4 and Fig. 5, the unidirectional continuous carbon fibres are not evenly distributed in the resin matrix, Sample 1 having resin rich regions and fibres rich regions scattered along the width of Sample 1.

Fig. 5 shows the number of carbon fibres as a function of the width (in µm) of Sample 1, 0 µm and 12 000 µm being the opposite sides of the component of Sample 1. The number of carbon fibres is counted in 30 µm wide vertical slices of Sample 1 on the optical microscopy cross-sectional image.

From the optical microscopy cross-sectional image of Sample 1, the average carbon fibre content has been calculated and found to be 46 vol%, which is 4 vol% lower than the nominal 50 vol%. The standard deviation is 15,34 %, the maximum carbon fibre content is 74 vol%, i.e., the maximum carbon fibre content measured in a 30 µm wide slice, and the minimum carbon fibre content is 3,1 vol%. It has also been found that 53 % of the material in the cross-section in Fig. 4 is below the nominal carbon fibre content of 50 vol%. As the carbon fibre content (in vol%) is measured on the optical microscopy cross-sectional image, the resin content (in vol%) can also be measured. The carbon fibre diameter may also be measured and the composition of the carbon fibres may also be measured on the cross-section of Sample 1. In particular, it is possible to verify that the precursor has been fully carbonized. The precursor may be polyacrylonitrile (PAN), for example. Indeed, if the carbon fibre diameter and/or the composition of the carbon fibres differ from the nominative specifications, the broadband electromagnetic terahertz radiation passing through the component may be affected. The composition of carbon fibres may also be taken into account by producing a sample of tape for calibration purpose of the device 10, the sample tape having the same chemical composition and a given state of carburization.

Although the measurements are carried out on a cross-section of Sample 1, the values are given in vol% instead of surface percentage (srf%). Indeed, the carbon fibres are continuous and it is assumed that the average carbon fibre content is constant along the x-direction of Sample 1. Due to carbon fibres waviness, the carbon fibre content of each 30 µm wide slices may vary along the x-direction. However, the characteristics of the distribution is similar from one cross-section to another, even over 1 m in the x-direction, i.e., islands type structure of tape will still be islands type structure along the tape and over short distances in the x-direction, i.e., within distances in the x-direction being around 50 mm, there are generally no changes in fibre content and/or distribution.

### Sample 2

Sample 2 is a component comprising unidirectional continuous carbon fibres embedded in a polyether ether ketone thermoplastic resin matrix, also referred to as PEEK. Sample 2 has a nominal 65 vol% of carbon fibres having an average diameter of 5,57 µm with a sample standard deviation of 0,28 µm, a width of 25 mm and a thickness of 0,15 mm. Fig. 6 shows a partial cross-section image taken with a microscope of Sample 2.

As can be seen from Fig. 6 and Fig. 7, the unidirectional continuous carbon fibres are not evenly distributed in the resin matrix, Sample 2 having resin rich regions running along the width direction (y-direction) of Sample 2.

Fig. 7 shows the number of carbon fibres as a function of the width (in µm) of Sample 2, 0 µm and 25 000 µm being the opposite sides of the component of Sample 2. The number of carbon fibres is counted in 30 µm wide vertical slices of Sample 2 on the optical microscopy cross-sectional image.

From the optical microscopy cross-sectional image of Sample 2, the average carbon fibre content has been calculated and found to be 71 vol%, which is 6 vol% higher than the nominal 65 vol%. The standard deviation is 7,3 %, the maximum carbon fibre content is 88 vol%, i.e., the maximum carbon fibre content measured in a 30 µm wide slice, and the minimum carbon fibre content is 35 vol%. It has also been found that 16 % of the material in the cross-section in Fig. 6 is below the nominal carbon fibre content of 65 vol%. As the carbon fibre content (in vol%) is measured on the optical microscopy cross-sectional image, the resin content (in vol%) can also be measured. The carbon fibre diameter may also be measured and the composition of the carbon fibres may also be measured on the cross-section of Sample 2. The composition of carbon fibres may also be taken into account by producing a sample of tape for calibration purpose of the device 10, the sample tape having the same chemical composition and a given state of carburization.

Although the measurements are carried out on a cross-section of Sample 2, the values are given in vol% instead of srf%. Indeed, the carbon fibres are continuous and it is assumed that the average carbon fibre content is constant along the x-direction of Sample 2. Due to carbon fibres waviness, the carbon fibre content of each 30 µm wide slices may vary along the x-direction. However, the characteristics of the distribution is similar from one cross-section to another, even over 1 m in the x-direction, i.e., islands type structure of tape will still be islands type structure along the tape and over short distances in the x-direction, i.e., within distances in the x-direction being around 50 mm, there are generally no changes in fibre content and/or distribution.

### Sample 3

Sample 3 is a component comprising unidirectional continuous carbon fibres embedded in a high density polyethylene thermoplastic resin matrix, also referred to as HDPE. Sample 3 has a nominal 49 vol% of carbon fibres having an average diameter of 6,69 µm with a sample standard deviation of 0,23 µm, a width of 12 mm and a thickness of 0,13 mm. Fig. 8 shows a partial cross-section image taken with a microscope of Sample 3.

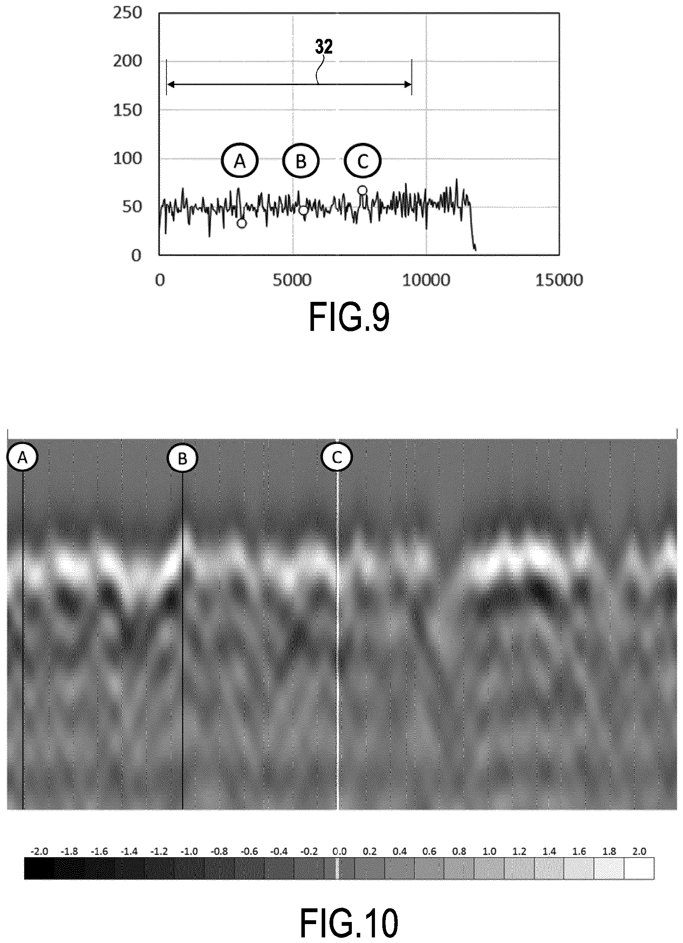

As can be seen from Fig. 8 and Fig. 9, the unidirectional continuous carbon fibres are not evenly distributed in the resin matrix, Sample 3 having a uniform unidirectional continuous carbon fibres distribution.

Fig. 9 shows the number of carbon fibres as a function of the width (in µm) of Sample 3, 0 µm and 12 000 µm being the opposite sides of the component of Sample 3. The number of carbon fibres is counted in 30 µm wide vertical slices of Sample 3 on the optical microscopy cross-sectional image.

From the optical microscopy cross-sectional image of Sample 3, the average carbon fibre content has been calculated and found to be 39 vol%, which is 10 vol% lower than the nominal 49 vol%. The standard deviation is 7,1 %, the maximum carbon fibre content is 58 vol%, i.e., the maximum carbon fibre content measured in a 30 µm wide slice, and the minimum carbon fibre content is 6,5 vol%. It has also been found that 92 % of the material in the cross-section in Fig. 8 is below the nominal carbon fibre content of 49 vol%. As the carbon fibre content (in vol%) is measured on the optical microscopy cross-sectional image, the resin content (in vol%) can also be measured. The carbon fibre diameter may also be measured and the composition of the carbon fibres may also be measured on the cross-section of Sample 3. The composition of carbon fibres may also be taken into account by producing a sample of tape for calibration purpose of the device 10, the sample tape having the same chemical composition and a given state of carburization.

Although the measurements are carried out on a cross-section of Sample 3, the values are given in vol% instead of srf%. Indeed, the carbon fibres are continuous and it is assumed that the average carbon fibre content is constant along the x-direction of Sample 3. Due to carbon fibres waviness, the carbon fibre content of each 30 µm wide slices may vary along the x-direction. However, the characteristics of the distribution is similar from one cross-section to another, even over 1 m in the x-direction, i.e., islands type structure of tape will still be islands type structure along the tape and over short distances in the x-direction, i.e., within distances in the x-direction being around 50 mm, there are generally no changes in fibre content and/or distribution.

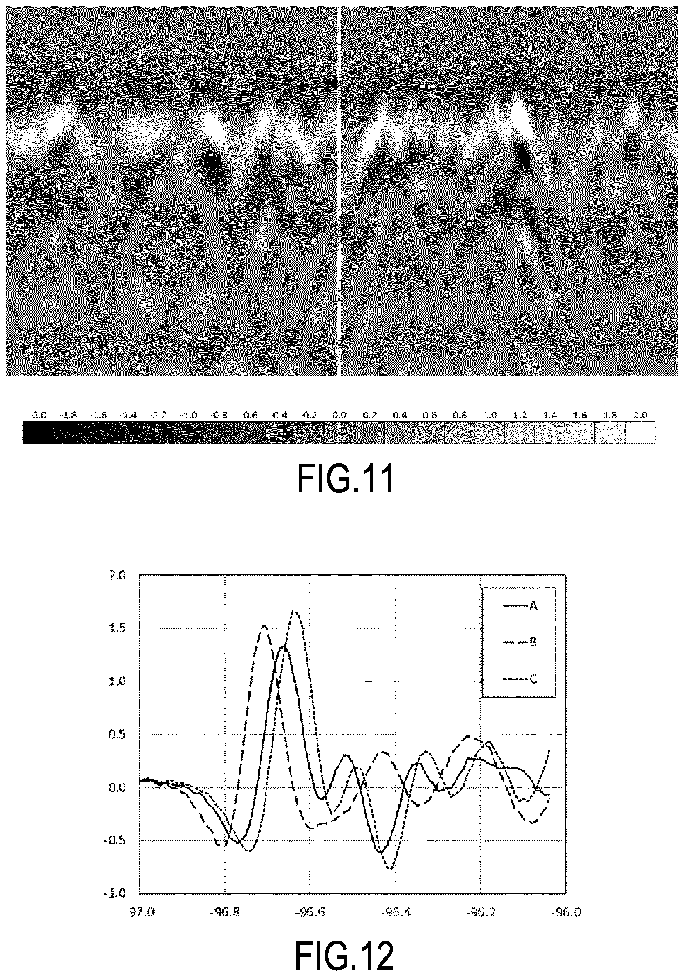

Fig. 10 and 11 show terahertz measurement results along two different lines for Sample 1. The lines are along the y-direction of Sample 1 and are spaced 917 mm from each other in the x-direction. The pitch in the y-direction between two measurements is equal to 30 µm along the line. The amplitude of the measured broadband electromagnetic terahertz radiation is given in arbitrary unit (see level of grey below the graph) and is being represented at different time delay stage positions as a function of the y position (in mm) on a given line in the y-direction of Sample 1. Figs. 10 and 11 represent approximately 100 measurements with a time delay stage position pitch of 10 µm and a width of Sample 1 of 9 000 µm, i.e., 9 mm. The measurements were carried out on a part 32 of the tape of Sample 1, as shown on Fig. 5. As can be seen, Figs. 10 and 11 are similar, showing that the carbon fibres distribution in Sample 1 is similar along the x-direction and that extrapolation to vol% may be made based on a cross-section measurement.

Fig. 12 shows a graph of the amplitude of the measured broadband electromagnetic terahertz radiation (in arbitrary unit) as a function of the time delay stage position (in mm) for different given locations on Sample 1. Each curve A, B, C is a representation of the measured broadband electromagnetic terahertz radiations in function of time and is representative of one given number of carbon fibres in Sample 1 in the 30 µm wide slice. Curves A, B, C respectively represent the amplitude of the measured broadband electromagnetic terahertz radiations as a function of the time delay stage position for 73, 7 and 199 carbon fibres for Sample 1. For Sample 1, i.e., for a given commercial couple carbon fibres/resin matrix, the curves A, B, C are stored in the database together with the number of carbon fibres, average carbon fibre content, average resin content, etc. For the simplicity of representation, Fig. 12 only shows three curves A, B, C. However, for each 30 µm slice, such a curve may be generated from the data in Figs. 10 and 11 and may be stored in the database. Moreover, for a given tape, it may be verified that slices having the same number of carbon fibres exhibit a similar curve as in Fig. 12 for Sample 1, in particular time delay stage position of the maximum of the amplitude of the measured broadband electromagnetic terahertz radiation.

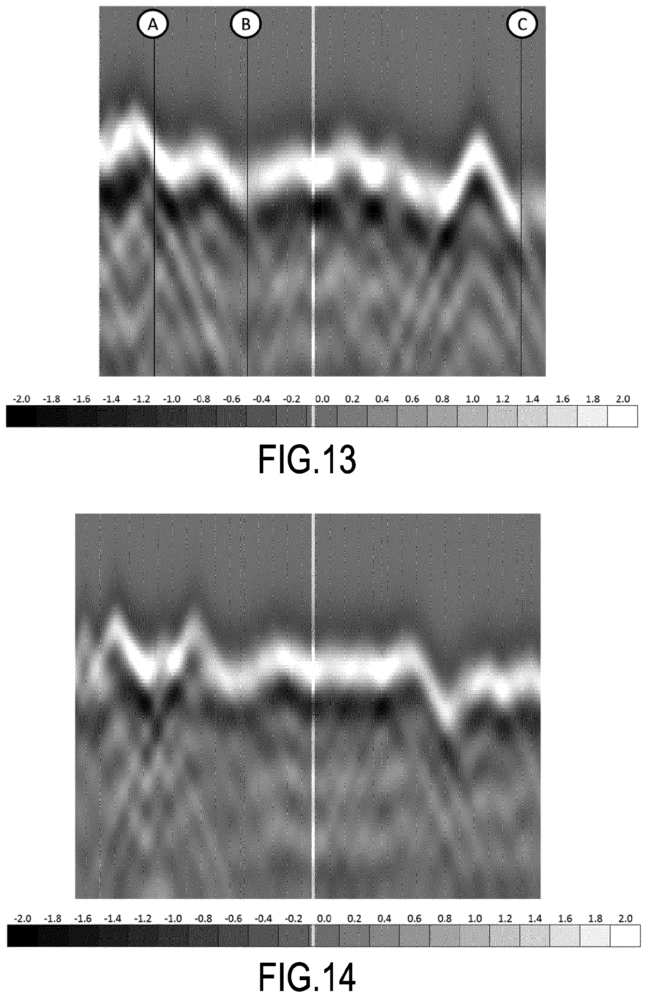

Figs. 13 and 14 show terahertz measurement results along two different lines for Sample 2. The lines are along the y-direction of Sample 2 and are spaced 917 mm from each other in the x-direction. The pitch in the y-direction between two measurements is equal to 30 µm along the line. The amplitude of the measured broadband electromagnetic terahertz radiation is given in arbitrary unit (see level of grey below the graph) and is being represented at different time delay stage positions as a function of the y position (in mm) on a given line in the y-direction of Sample 2. Figs. 13 and 14 represent approximately 100 measurements with a time delay stage position pitch of 10 µm and a width of Sample 2 of 6 090 µm, i.e., 6,09 mm. The measurements were carried out on a part 32 of the tape of Sample 2, as shown on Fig. 7. As can be seen, Figs. 13 and 14 are similar, showing that the carbon fibres distribution in Sample 2 is similar along the x-direction and that extrapolation to vol% may be made based on a cross-section measurement.

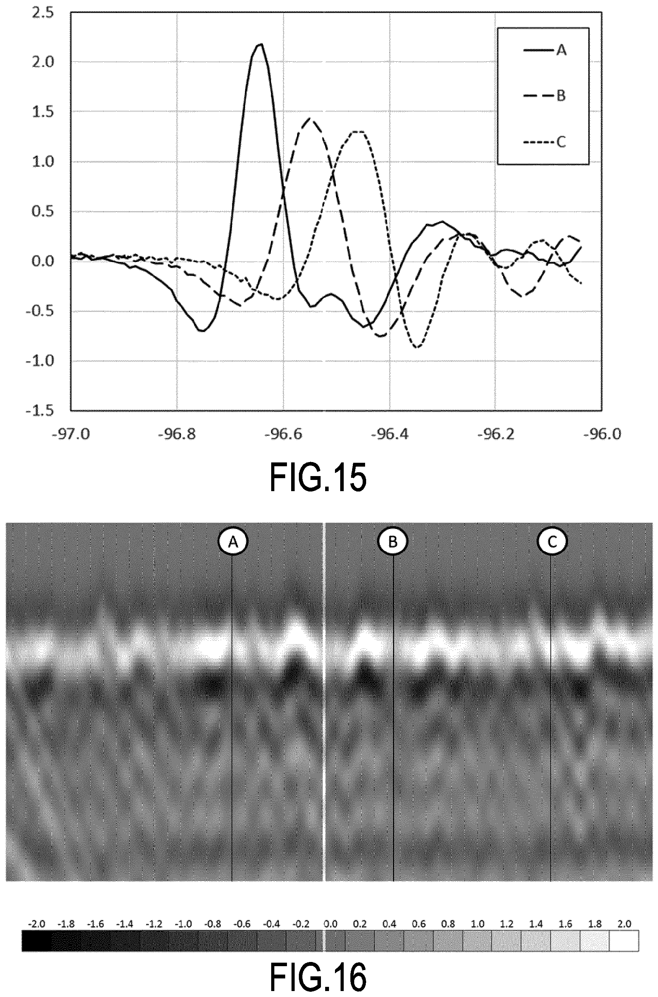

Fig. 15 shows a graph of the amplitude of the measured broadband electromagnetic terahertz radiation (in arbitrary unit) as a function of the time delay stage position (in mm) for different given locations on Sample 2. Curves A, B, C respectively represent the amplitude of the measured broadband electromagnetic terahertz radiations as a function of the time delay stage position for 113, 168 and 176 carbon fibres for Sample 2.

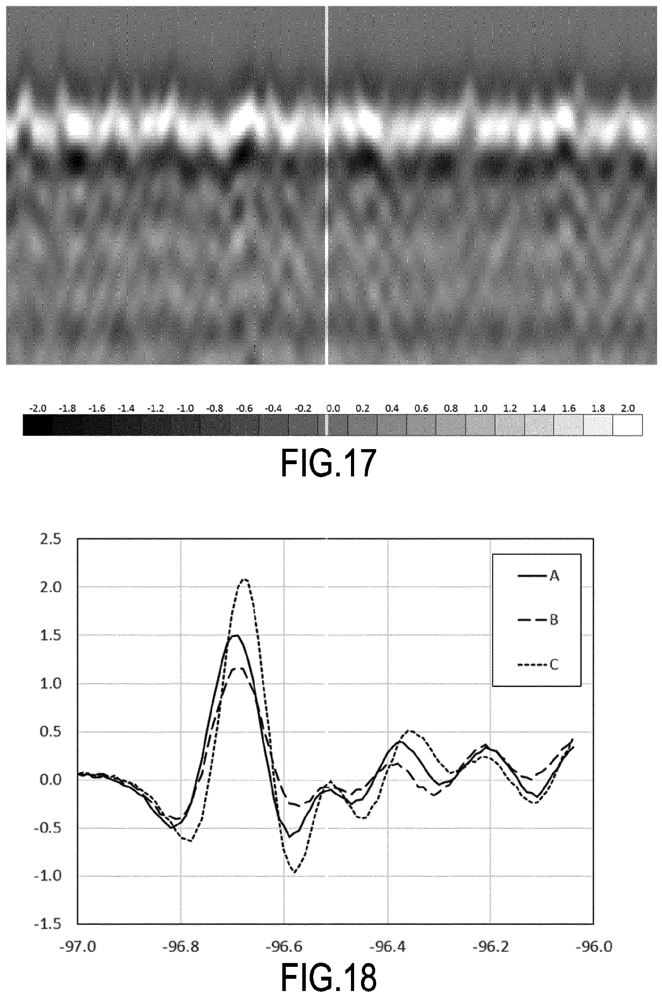

Figs. 16 and 17 show terahertz measurement results along two different lines for Sample 3. The lines are along the y-direction of Sample 3 and are spaced 917 mm from each other in the x-direction. The pitch in the y-direction between two measurements is equal to 30 µm along the line. The amplitude of the measured broadband electromagnetic terahertz radiation is given in arbitrary unit (see level of grey below the graph) and is being represented at different time delay stage positions as a function of the y position (in mm) on a given line in the y-direction of Sample 3. Figs. 16 and 17 represent approximately 100 measurements with a time delay stage position pitch of 10 µm and a width of Sample 3 of 9 000 µm, i.e., 9 mm. The measurements were carried out on a part 32 of the tape of Sample 3, as shown on Fig. 9. As can be seen, Figs. 16 and 17 are similar, showing that the carbon fibres distribution in Sample 3 is similar along the x-direction and that extrapolation to vol% may be made based on a cross-section measurement.

Fig. 18 shows a graph of the amplitude of the measured broadband electromagnetic terahertz radiation (in arbitrary unit) as a function of the time delay stage position (in mm) for different given locations on Sample 3. Curves A, B, C respectively represent the amplitude of the measured broadband electromagnetic terahertz radiations as a function of the time delay stage position for 137, 47 and 68 carbon fibres for Sample 3.

It is also possible of improving the database by comparing the generated map of the retrieved values of the parameter indicative of the carbon content with measured values of the parameter on cross-sectional microscopy images of a second plurality of samples; by storing in the database the measured values of the parameter as a function of measured broadband electromagnetic terahertz radiations; and by repeating the two previous steps until a deviation between the generated map of the retrieved values of the parameter indicative of the carbon content and the measured values of the parameter on cross-sectional microscopy images of the second plurality of samples is equal to or smaller than 15% at each given location.

Once the database is built for a component 12, the measurements on the component 12 itself may be carried out according to the non-destructive methods 100, 200 described above.

For example, lines in the y-direction are chosen to be measured on the full width of the component 12. Graphs similar to those of Figs. 10, 11, 13, 14, 16, 17 may be obtained by displacing the component 12 relative to the emitter 22 and the microprobe 26, the microprobe 26 being fixed in the main x-y plane relative to the emitter 22, along a first line at a first time delay stage position. The measurements are carried out at different given location along the first line, the y-coordinate of each measured point being incremented by a given pitch, for example 30 µm. The broadband electromagnetic terahertz radiation for each given location is stored in a first file together with the time delay stage position and the x, y coordinates of the given location. Then, the measurement is carried out on the same first line, on the same given locations with a different time delay stage position. The time delay stage position may be incremented by a pitch of 10 µm for example.

These steps are repeated at different time delay stage positions so that a curve similar to the curves on Fig. 12 may be obtained, i.e. the broadband electromagnetic terahertz radiations in function of time for each given location on the first line. The curves for each given location on the first line are compared to the broadband electromagnetic terahertz radiations in function of time present in the database and for example, the number of carbon fibres corresponding to the broadband electromagnetic terahertz radiations in function of time is retrieved. The x, y coordinates of the given location and the retrieved number of carbon fibres is stored in a second file. These steps are repeated for each given location.

To compare the measured broadband electromagnetic terahertz radiations in function of time to the database of broadband electromagnetic terahertz radiations in function of time, one may compare a value of time delay of a given signal amplitude of the broadband electromagnetic terahertz radiations in function of time. For example, at a given signal amplitude, one may compare the value of the time delay stage position. It is also possible to compare the time delay stage position of the maximum amplitude of the measured broadband electromagnetic terahertz radiations in function of time. This maximum amplitude may be obtained through mathematical algorithm for example.

To reduce the measurement time, it is possible to identify a range of time delay stage positions, in which the maximum amplitude of the measured broadband electromagnetic terahertz radiations in function of time falls, thus reducing the number of measurements requested to build up the curves of Figs. 12, 15 and 18.

The component 12 is then displaced in the x-direction relative to the emitter 22 and the microprobe 26, the microprobe 26 being fixed in the main x-y plane relative to the emitter 22, so as to carry out the measurement along a second line and store the number of carbon fibres as a function of the coordinates of the given locations along the second line in the second file.

By repeating the measurement along different lines, it is possible to build a map of the number of carbon fibres in the component.

When the z coordinate of the microprobe side surface of the component 12 is also measured, the z coordinate of each given location is also stored in the first file and in the second file. These measurement part, in this case an optical measurement system 28, may be placed at a location in the x-y plane which is different from the location of the emitter 22 and the microprobe 26. However, the measurements of the x, y, z coordinates are carried out by the optical measurement system 28 at the given locations at which the broadband electromagnetic terahertz radiation are to be measured. This allows the vertical displacement, i.e., in the z-direction of the microprobe 26 and/or the emitter 22 so as to keep a constant distance between the microprobe 26 and the surface of the component 12 on the microprobe side and between the microprobe 26 and the emitter 22.

Having a second optical measurement system 28 on the emitter side of the component 12 allows measuring the surface of the component 12 on the emitter side of the component 12 and, together with the measurement of the optical measurement system 28 on the microprobe side of the component 12, the cross-section of the component 12 may be measured.

Knowing the diameter and the number of carbon fibres present at the given location, it is possible to calculate the carbon fibres volume of the carbon fibres at the given location and, together with the cross-section of the component 12, to calculate the carbon fibre content (in vol%) and the resin content (in vol%) of the component 12. Using digital image analysis, the carbon fibres are white pixels and the resin is grey pixels. Thus, an average carbon fibre content and resin content may be calculated respectively as a ratio of the number of white pixels over the total number of white and grey pixels and as a ratio of the number of grey pixels over the total number of white and grey pixels.

However, without measured cross-section of the component 12, it is still possible to calculate the carbon fibre content (in vol%) and the resin content (in vol%) of the component 12, based on an average estimate of the cross-section of the component 12.

For example, for a complete spool of the component 12, the measurements along the lines may be carried out every 1 m, or every 5 m, or every 20 m, or every 50 m, or every 100 m depending on the component 12 and the intended use of the component 12.

Thus, the map may be obtained for the complete spool, although the map is not continuous but an assembly of discrete lines.

The map may be simplified by applying simplification rules to the map of the retrieved values of the parameter indicative of the carbon content, so as to obtain a simplified map of the retrieved values of the parameter indicative of the carbon content.

The map may be advantageously stored in a device located on the spool and/or on the component 12.

For example, the location of the measurements may be identified on the component itself by inkjet printing identification code, the identification code being related to the stored information in the second file or to the map. It is therefore possible to keep precise track of the measurement location on the component and the associate retrieved value of the parameter associated with that location.

The information related to the map may also be stored in a device located on the spool, such as an inertia device that would register the unwinding of the component on the spool.

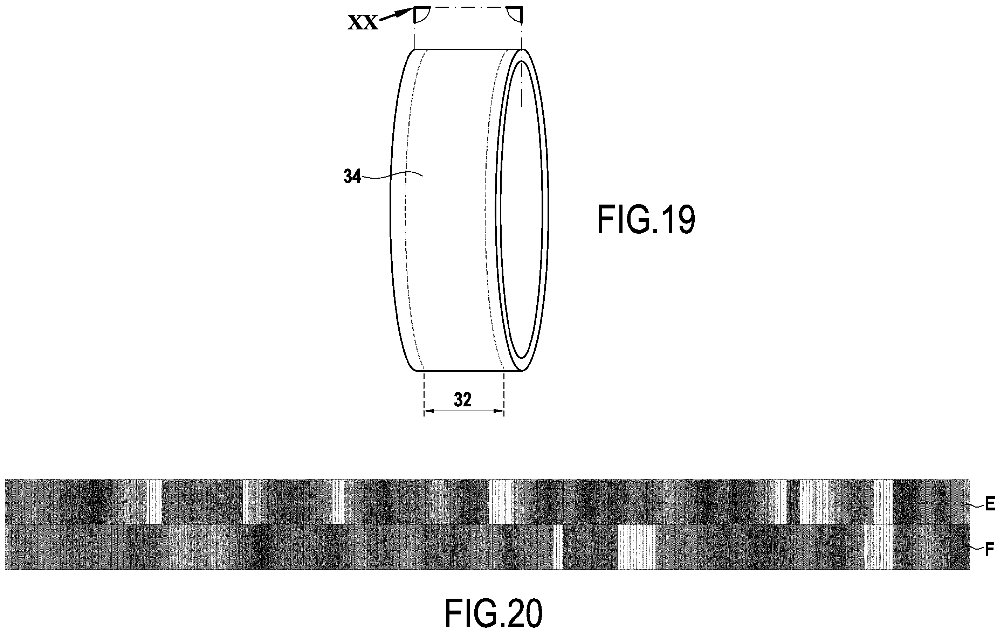

In the fabrication process of a composite part 34 (see Fig. 19) made from the component 12, the component 12 is unwound from the spool on which it has been wound and the composite part is generally obtained by at least a component placement method, a component winding method, or a combination of both methods on a support.

To give desired mechanical properties to the composite part, several layers of the component 12 are generally present in a cross-section of the composite part, i.e., when view in cross-section, the composite part comprises several layers of components disposed on top of one another (see Fig. 20).

During the fabrication process, the component 12 may be heated by a laser during the placement or the winding of the component 12 on the support, so as to at least partially melt the resin matrix and consolidate the composite part during the fabrication process and/or the component 12 may be heated after the placement or the winding of the component 12, for example in an autoclave.

An example of simplified map is shown in Fig. 20 for a cross-section of the composite part 34 of Fig. 19 made from Sample 1. It is to be noted that the height of the layer is completely arbitrary and does not represent the thickness of the component 12.

For example, the terahertz measurement results of Figs. 10 and 11 may be pixelated so that a pixel represents a slice of 30 µm width. The curve of the amplitude of the measured broadband electromagnetic terahertz radiation (in arbitrary unit) as a function of the time delay stage position (in mm) are obtained for each pixel along the first line E on Sample 1 for Figs. 10 and 11. Each measured curve, i.e., each measured broadband electromagnetic terahertz radiations in function of time is compared to the broadband electromagnetic terahertz radiations in function of time of the database and a value of the parameter indicative of the carbon content, in this example the number of carbon fibres, is retrieved from the database and stored in the second file together with the coordinate of the given location.

Then, each slice is represented with a colour code representing the number of carbon fibres presents in each slice (see legend on the right hand side of Fig. 19).

As can be seen on Fig. 19, two different cross-sections of the component 12 taken along two different lines E, F of the component 12 in the y-direction are represented, one cross-section being represented on top of the other. Line E and line F may be spaced from one another of a distance in the x-direction that allows line E to be disposed on top of line F when the component 12 is placed on a support to produce a composite part from the component 12.

During the fabrication process, the component 12 may be put in traction, the component 12 may pass into eyelets, the component 12 may be submitted to heating. All those parameters of the fabrication process may be accounted for allowing the determination of values of a physical parameter of the component 12 after being processed, i.e. at the end of the fabrication process.

Each value may be compared to a threshold value and a warning signal may be returned when the threshold value is reached at a given location of the component. As a non-limitative example of physical value, Young's modulus may be used. It is therefore possible to determine a risk of failure or a location in the composite part that may present lower mechanical properties by simulation of the finished composite part.

Decisions may be taken, based on the simulation, for example to launch the fabrication process with a given spool or to use a different spool. Indeed, by combining the map and the winding pattern or the placement pattern, it is possible to identify region in the simulated composite part where accumulations of low carbon fibre content occur. It is also possible to build simulation models that include the actual carbon fibre distribution. As the region with accumulation of low carbon fibre content is depending upon the winding pattern or the placement pattern, a given component 12 may not be suitable for the fabrication process of one given composite part but may be suitable for the fabrication process of another given composite part.

The non-destructive method may also be used to determine a physical property of the composite part based on the pattern of the component 12 and the map of the retrieved values of the parameter indicative of the carbon content.

As can be seen on Fig. 19, it is possible to identify region in the composite part that will present concentration of high resin matrix content.

With additional surface acoustic wave measurement systems, it is also possible to map the voids in the component 12.

As can be seen, the variation of the average volume content of carbon fibre in the component 12 may vary from the nominal value. Even small average deviation, such as 4 vol% for Sample 1 for example, may change the mechanical behaviour of the component 12.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present disclosure.

It is intended that the specification and examples be considered as exemplary only, while the scope of the invention is defined by the following claims.

For example, although the non-destructive method is disclosed for components comprising unidirectional continuous carbon fibres, i.e., several meters long at least, the method could also be applied to component comprising carbon fibres having a length equal to or larger than 15 mm, such as recycled carbon fibres. It is understood that although the embodiments have been described with the time delay stage being disposed before the emitter, the time delay stage may be place instead before the microprobe.

## Claims

1. A non-destructive method (100; 200) for characterising a component (12) comprising unidirectional continuous carbon fibres having a main x-y plane, the continuous carbon fibres being oriented along the x-axis, the component being a unidirectional intermediate composite having unidirectional continuous carbon fibres embedded in a thermoplastic or thermoset resin matrix, the method comprising:
a) triggering (104) an ultra-short laser pulse for triggering an emitter (22) to emit, along a z-axis, which is perpendicular to the main x-y plane, broadband electromagnetic terahertz radiations having a single polarization state along the y-axis, the polarization state of the radiation being perpendicular to the main fibre axis;
b) passing (106) the broadband electromagnetic radiations through the main x-y plane of the component (12) at a given location in the main x-y plane of the component (12);
c) triggering (108) a microprobe (26) with the ultra-short laser pulse, one of the emitter or the microprobe receiving the ultra-short laser pulse having passed through a time delay stage at a position of the time delay stage, and measuring the broadband electromagnetic terahertz radiations that has passed through the component (12) using the microprobe (26), the microprobe (26) being fixed in the x-y plane relative to the emitter (22);
d) storing (110) the measured broadband electromagnetic terahertz radiations, the coordinates of the given location and the time delay stage position in a first file;
e) modifying (114) the time delay stage position and repeating steps a) through d) so as to measure the broadband electromagnetic terahertz radiations in function of time at the given location;
f) comparing (116) the measured broadband electromagnetic terahertz radiations in function of time to a database of broadband electromagnetic terahertz radiations in function of time;
g) retrieving (118) a value of a parameter indicative of a carbon content of the component (12) from the database based on the broadband electromagnetic terahertz radiations in function of time; and
h) storing (120) the retrieved value of the parameter indicative of the carbon content of the component (12) and the given location in a second file;
wherein the parameter indicative of the carbon content includes at least an amount of resin and an amount of carbon;
wherein the non-destructive method further comprises using a surface acoustic wave measurement system (30) for surface acoustic wave measurements of the component (12) for determining a void content of the component (12) based on the amount of resin and the amount of carbon.

2. The non-destructive method (100; 200) according to claim 1, wherein before step e) the emitter (22) and the component (12) are displaced relative to one another by a given pitch in the y-direction, the broadband electromagnetic terahertz radiation passing through the main x-y plane of the component (12) at another given location in the main x-y plane of the component (12).

3. The non-destructive method (100; 200) according to claim 1 or 2, wherein after step h) the emitter (22) and the component (12) are displaced relative to one another by a given pitch in the x-direction, the broadband electromagnetic terahertz radiation passing through the main x-y plane of the component (12) at another given location in the main x-y plane of the component (12).

4. The non-destructive method (100; 200) according to any of claim 1 or 2, wherein the pitch in the y-direction is equal to or greater than 20 µm and is equal to or smaller than 100 µm.

5. The non-destructive method (100; 200) according to any of claims 1 to 4, comprising measuring the coordinates x, y, z of one surface of the component (12), storing these coordinates so as to maintain a constant distance between the surface of the component (12) and the microprobe (26).

6. The non-destructive method (100; 200) according to any of claims 1 to 5, wherein comparing the measured broadband electromagnetic terahertz radiation in function of time to the database of broadband electromagnetic terahertz radiations in function of time comprises comparing a value of time delay of a given signal amplitude of the broadband electromagnetic terahertz radiations in function of time.

7. The non-destructive method (100; 200) according to any of claims 1 to 6, wherein the parameter indicative of the carbon content further includes a number of carbon fibres.

8. The non-destructive method (100; 200) according to any of claims 1 to 7, comprising building a map of the retrieved values of the parameter indicative of the carbon content as a function of the given locations of the component (12).

9. The non-destructive method (100; 200) according to claim 8, comprising applying simplification rules to the map of the retrieved values of the parameter indicative of the carbon content, so as to obtain a simplified map of the retrieved values of the parameter indicative of the carbon content.

10. The non-destructive method (100; 200) according to any of claims 1 to 9, comprising building the database by:
- correlating measured broadband electromagnetic terahertz radiations in function of time with a measured value of a parameter on cross-sectional microscopy images of a first plurality of samples;
- storing in the database the measured values of the parameter as a function of measured broadband electromagnetic terahertz radiations in function of time.

11. The non-destructive method (100; 200) according to claim 10, comprising improving the database by:
- comparing a generated map of the retrieved values of the parameter indicative of the carbon content with measured values of the parameter on cross-sectional microscopy images of a second plurality of samples;
- storing in the database the measured values of the parameter as a function of measured broadband electromagnetic terahertz radiations in function of time; and
- repeating the two previous steps until a deviation between the generated map of the retrieved values of the parameter indicative of the carbon content and the measured values of the parameter on cross-sectional microscopy images of the second plurality of samples is equal to or smaller than 15% at each given location.

12. The non-destructive method (100; 200) according to claim 10 or 11, wherein the parameter measured on cross-sectional microscopy images is a number of fibres, a total amount of fibre in volume %, an amount of resin in volume %.

13. The non-destructive method (100; 200) according to claim 8 or 9 in combination with claim 7, wherein the map is obtained for a complete spool of the unidirectional intermediate composite having unidirectional continuous carbon fibres embedded in a thermoplastic or thermoset resin matrix, information related to the map being stored in a device located on the spool and/or on the component (12).

14. A method for determination of a plurality of values of a physical property of a component, for a fabrication process of a composite part with the component (12), the component (12) comprises unidirectional continuous carbon fibres having a main x-y plane, the continuous carbon fibres being oriented along the x-axis, the component being a unidirectional intermediate composite having unidirectional continuous carbon fibres embedded in a thermoplastic or thermoset resin matrix and a simulation method uses the map of retrieved values of a parameter indicative of the carbon content according to claim 8 or 9 and a plurality of parameters of the fabrication process to determine the value of the physical property of the component (12) at the end of the fabrication process at a given location of the component, each value being compared to a threshold value and a warning signal being returned when the threshold value is reached.

15. A method for determining a physical property of a composite material or composite part made from a component (12) comprising unidirectional continuous carbon fibres having a main x-y plane, the continuous carbon fibres being oriented along the x-axis, the component being a unidirectional intermediate composite having unidirectional continuous carbon fibres embedded in a thermoplastic or thermoset resin matrix, the method comprising building a map of retrieved values of a parameter indicative of a carbon content according to claim 8 or 9, the physical property being dependent upon the parameter indicative of a carbon content.

## Patentansprüche

1. Zerstörungsfreies Verfahren (100; 200) zum Charakterisieren eines Komponente (12), umfassend unidirektionale kontinuierliche Kohlenstofffasern, die eine x-y-Hauptebene aufweisen, wobei die kontinuierlichen Kohlenstofffasern entlang der x-Achse ausgerichtet sind, wobei die Komponente ein unidirektionaler Zwischenverbundstoff ist, der unidirektionale kontinuierliche Kohlenstofffasern aufweist, die in eine thermoplastische oder duroplastische Harzmatrix eingebettet sind, das Verfahren umfassend:
a) Auslösen (104) eines ultrakurzen Laserimpulses zum Auslösen eines Senders (22), um entlang einer z-Achse, die senkrecht zu der x-y-Hauptebene ist, elektromagnetische Terahertz-Breitbandstrahlung mit einem einzigen Polarisationszustand entlang der y-Achse zu emittieren, wobei der Polarisationszustand der Strahlung senkrecht zu der Hauptfaserachse ist;
b) Leiten (106) der elektromagnetischen Breitbandstrahlung durch die x-y-Hauptebene der Komponente (12) an einer bestimmten Stelle in der x-y-Hauptebene der Komponente (12);
c) Auslösen (108) einer Mikrosonde (26) mit dem ultrakurzen Laserimpuls, wobei entweder der Sender oder die Mikrosonde den ultrakurzen Laserimpuls empfängt, der eine Zeitverzögerungsstufe an einer Zeitverzögerungsstufen-Position durchlaufen hat, und Messen der elektromagnetischen Terahertz-Breibandstrahlung, die durch Komponente (12) geleitet wurde, unter Verwendung der Mikrosonde (26), wobei die Mikrosonde (26) in der x-y-Ebene in Bezug auf den Sender (22) fixiert ist;
d) Speichern (110) der gemessenen elektromagnetischen Terahertz-Breitbandstrahlung, der Koordinaten der angegebenen Stelle und der Zeitverzögerungsstufen-Position in einer ersten Datei;
e) Ändern (114) der Zeitverzögerungsstufen-Position und Wiederholen der Schritte a) bis d), um die elektromagnetischen Terahertz-Breitbandstrahlung abhängig von der Zeit an der gegebenen Stelle zu messen;
f) Vergleichen (116) der gemessenen elektromagnetischen Terahertz-Breitbandstrahlung abhängig von der Zeit mit einer Datenbank für elektromagnetische Terahertz-Breitbandstrahlung abhängig von der Zeit;
g) Abrufen (118) eines Werts eines Parameters, der indikativ für einen Kohlenstoffgehalt der Komponente (12) ist, aus der Datenbank basierend auf der elektromagnetischen Terahertz-Breitbandstrahlung abhängig von der Zeit; und
h) Speichern (120) des abgerufenen Werts des Parameters, der den Kohlenstoffgehalt der Komponente (12) und die gegebene Stelle angibt, in einer zweiten Datei;
wobei der Parameter, der indikativ für den Kohlenstoffgehalt ist, mindestens eine Harzmenge und eine Kohlenstoffmenge beinhaltet;
wobei das zerstörungsfreie Verfahren ferner ein Verwenden eines akustischen Oberflächenwellenmesssystems (30) für akustische Oberflächenwellenmessungen der Komponente (12) zum Bestimmen eines Hohlraumgehalts der Komponente (12) basierend auf der Harzmenge und der Kohlenstoffmenge umfasst.

2. Zerstörungsfreies Verfahren (100; 200) nach Anspruch 1, wobei vor Schritt e) der Sender (22) und die Komponente (12) um einen vorgegebenen Abstand in y-Richtung in Bezug aufeinander verschoben werden, wobei die elektromagnetische Terahertz-Breitbandstrahlung an einer anderen vorgegebenen Stelle in der x-y-Hauptebene der Komponente (12) durch die die x-y-Hauptebene der Komponente (12) geleitet wird.

3. Zerstörungsfreies Verfahren (100; 200) nach Anspruch 1 oder 2, wobei nach Schritt h) der Sender (22) und die Komponente (12) um einen vorgegebenen Abstand in x-Richtung in Bezug aufeinander verschoben werden, wobei die elektromagnetische Terahertz-Breitbandstrahlung an einer anderen vorgegebenen Stelle in der x-y-Hauptebene der Komponente (12) durch die die x-y-Hauptebene der Komponente (12) geleitet wird.

4. Zerstörungsfreies Verfahren (100; 200) nach einem der Ansprüche 1 oder 2, wobei der Abstand in y-Richtung gleich wie oder größer als 20 µm und gleich wie oder kleiner als 100 µm ist.

5. Zerstörungsfreies Verfahren (100; 200) nach einem der Ansprüche 1 bis 4, wobei die Koordinaten x, y, z einer Oberfläche der Komponente (12) gemessen werden und diese Koordinaten gespeichert werden, um einen konstanten Abstand zwischen der Oberfläche der Komponente (12) und der Mikrosonde (26) beizubehalten.

6. Zerstörungsfreies Verfahren (100; 200) nach einem der Ansprüche 1 bis 5, wobei der Vergleich der gemessenen elektromagnetischen Terahertz-Breitbandstrahlung abhängig von der Zeit mit der Datenbank der elektromagnetischen Terahertz-Breitbandstrahlung abhängig von der Zeit ein Vergleichen eines Werts der Zeitverzögerung einer gegebenen Signalamplitude der elektromagnetischen Terahertz-Breitbandstrahlung abhängig von der Zeit umfasst.

7. Zerstörungsfreies Verfahren (100; 200) nach einem der Ansprüche 1 bis 6, wobei der Parameter, der indikativ für den Kohlenstoffgehalt ist, ferner eine Anzahl von Kohlenstofffasern beinhaltet.

8. Zerstörungsfreies Verfahren (100; 200) nach einem der Ansprüche 1 bis 7, umfassend ein Erstellen einer Karte der abgerufenen Werte des Parameters, der indikativ für den Kohlenstoffgehalt ist, abhängig von den gegebenen Stellen der Komponente (12).

9. Zerstörungsfreies Verfahren (100; 200) nach Anspruch 8, umfassend ein Anwenden von Vereinfachungsregeln auf die Karte der abgerufenen Werte des Parameters, der indikativ für den Kohlenstoffgehalt ist, um eine vereinfachte Karte der abgerufenen Werte des Parameters, der indikativ für den Kohlenstoffgehalt ist, zu erlangen.

10. Zerstörungsfreie Verfahren (100; 200) nach einem der Ansprüche 1 bis 9, umfassend ein Erstellen der Datenbank durch:
- Korrelieren von gemessener elektromagnetischer Terahertz-Breitbandstrahlung abhängig von der Zeit mit einem gemessenen Wert eines Parameters auf mikroskopischen Querschnittsbildern einer ersten Vielzahl von Proben;
- Speichern der Messwerte des Parameters in der Datenbank abhängig von der gemessenen elektromagnetischen Terahertz-Breitbandstrahlung abhängig von der Zeit.

11. Zerstörungsfreies Verfahren (100; 200) nach Anspruch 10, umfassend ein Verbessern der Datenbank durch:
- Vergleichen einer erzeugten Karte der abgerufenen Werte des Parameters, der indikativ für den Kohlenstoffgehalt ist, mit gemessenen Werten des Parameters auf mikroskopischen Querschnittsbildern einer zweiten Vielzahl von Proben;
- Speichern der Messwerte des Parameters in der Datenbank abhängig von der gemessenen elektromagnetischen Terahertz-Breitbandstrahlung abhängig von der Zeit; und
- Wiederholen der zwei vorhergehenden Schritte, bis eine Abweichung zwischen der erzeugten Karte der abgerufenen Werte des Parameters, der indikativ für den Kohlenstoffgehalt ist, und den gemessenen Werten des Parameters auf mikroskopischen Querschnittsbildern der zweiten Vielzahl von Proben an jeder gegebenen Stelle gleich wie oder kleiner als 15 % ist.

12. Zerstörungsfreies Verfahren (100; 200) nach Anspruch 10 oder 11, wobei der auf mikroskopischen Querschnittsbildern gemessene Parameter die Anzahl der Fasern, die Gesamtmenge der Fasern in Volumen-%, die Menge des Harzes in Volumen-% ist.

13. Zerstörungsfreies Verfahren (100; 200) nach Anspruch 8 oder 9 in Kombination mit Anspruch 7, wobei das Kennfeld für eine vollständige Spule des unidirektionalen Zwischenverbundstoffs mit unidirektionalen kontinuierlichen Kohlenstofffasern, die in eine thermoplastische oder duroplastische Harzmatrix eingebettet sind, erlangt wird, wobei Informationen in Bezug auf das Kennfeld in einer Vorrichtung gespeichert werden, die sich auf der Spule und/oder auf dem Komponente (12) befindet.

14. Verfahren zum Bestimmen einer Vielzahl von Werten einer physikalischen Eigenschaft eines Komponente; für ein Herstellungsverfahren einer Verbundkomponente mit der Komponente (12), wobei die Komponente (12) unidirektionale kontinuierliche Kohlenstofffasern mit einer x-y-Hauptebene umfasst, wobei die kontinuierlichen Kohlenstofffasern entlang der x-Achse ausgerichtet sind, die Komponente ein unidirektionaler Zwischenverbundwerkstoff ist, der unidirektionale kontinuierliche Kohlenstofffasern aufweist, die in eine thermoplastische oder duroplastische Harzmatrix eingebettet sind, und ein Simulationsverfahren die Karte der abgerufenen Werte eines Parameters, der indikativ für den Kohlenstoffgehalt ist, nach Anspruch 8 oder 9, und eine Vielzahl von Parametern des Herstellungsprozesses verwendet, um den Wert der physikalischen Eigenschaft der Komponente (12) am Ende des Herstellungsverfahrens an einer gegebenen Stelle der Komponente zu bestimmen, wobei jeder Wert mit einem Schwellenwert verglichen wird und ein Warnsignal zurückgegeben wird, wenn der Schwellenwert erreicht ist.

15. Verfahren zum Bestimmen einer physikalischen Eigenschaft eines Verbundmaterials oder eines Verbundteils, das aus einer Komponente (12) hergestellt ist, umfassend unidirektionale kontinuierliche Kohlenstofffasern, die eine x-y-Hauptebene aufweisen, wobei die kontinuierlichen Kohlenstofffasern entlang der x-Achse ausgerichtet sind, wobei die Komponente ein unidirektionaler Zwischenverbundstoff ist, der unidirektionale kontinuierliche Kohlenstofffasern aufweist, die in eine thermoplastische oder duroplastische Harzmatrix eingebettet sind, wobei das Verfahren ein Erstellen einer Karte von abgerufenen Werten eines Parameters, der indikativ für den Kohlenstoffgehalt ist, umfasst, gemäß Anspruch 8 oder 9, wobei die physikalische Eigenschaft von dem Parameter abhängt, der indikativ für einen Kohlenstoffgehalt ist.

## Revendications

1. Procédé non destructif (100 ; 200) destiné à caractériser un composant (12) comprenant des fibres de carbone continues unidirectionnelles ayant un plan principal x/y, les fibres de carbone continues étant orientées le long de l'axe x, le composant étant un composite intermédiaire unidirectionnel ayant des fibres de carbone continues unidirectionnelles incorporées dans une matrice de résine thermoplastique ou thermodurcissable, le procédé comprenant :
a) le déclenchement (104) d'une impulsion laser ultra-courte afin de déclencher un émetteur (22) pour émettre, le long d'un axe z, qui est perpendiculaire au plan principal x/y, des rayonnements électromagnétiques térahertz à large bande ayant un état de polarisation unique le long de l'axe y, l'état de polarisation du rayonnement étant perpendiculaire à l'axe de fibre principal ;
b) le passage (106) du rayonnement électromagnétique à large bande à travers le plan principal x/y du composant (12) dans un emplacement donné dans le plan principal x/y du composant (12) ;
c) le déclenchement (108) d'une microsonde (26) avec l'impulsion laser ultra-courte, l'un de l'émetteur ou de la microsonde recevant l'impulsion laser ultra-courte qui est passée à travers un étage de retard temporel dans une position de l'étage de retard temporel, et la mesure des rayonnements électromagnétiques térahertz à large bande qui sont passés à travers le composant (12) en utilisant la microsonde (26), la microsonde (26) étant fixée dans le plan x/y par rapport à l'émetteur (22) ;
d) le stockage (110) des rayonnements électromagnétiques térahertz à large bande, des coordonnées de l'emplacement donné et de la position de l'étage de retard temporel dans un premier fichier ;
e) la modification (114) de la position de l'étage de retard temporel et la répétition des étapes a) à d) de façon à mesurer les rayonnements électromagnétiques térahertz à large bande en fonction du temps à l'emplacement donné ;
f) la comparaison (116) des rayonnements électromagnétiques térahertz à large bande mesurés en fonction du temps dans une base de données de rayonnements électromagnétiques térahertz à large bande en fonction du temps ;
g) la récupération (118) d'une valeur d'un paramètre indicatif d'une teneur en carbone du composant (12) dans la base de données basée sur les rayonnements électromagnétiques térahertz à large bande en fonction du temps ; et
h) le stockage (120) de la valeur récupérée du paramètre indicatif de la teneur en carbone du composant (12) et de l'emplacement donné dans un deuxième fichier ;
le paramètre indicatif de la teneur en carbone comprenant au moins une quantité de résine et une quantité de carbone ;
le procédé non destructif comprenant en outre l'utilisation d'un système de mesure d'onde acoustique de surface (30) pour des mesures d'onde acoustique de surface du composant (12) afin de déterminer une teneur en vide du composant (12) sur la base de la quantité de résine et de la quantité de carbone.

2. Procédé non destructif (100 ; 200) selon la revendication 1, selon lequel, avant l'étape e), l'émetteur (22) et le composant (12) sont déplacés l'un par rapport à l'autre d'un pas donné dans la direction y, le rayonnement électromagnétique térahertz à large bande passant à travers le plan principal x/y du composant (12) dans un autre emplacement donné dans le plan principal x/y du composant (12).

3. Procédé non destructif (100 ; 200) selon la revendication 1 ou 2, selon lequel, après l'étape h), l'émetteur (22) et le composant (12) sont déplacés l'un par rapport à l'autre d'un pas donné dans la direction x, le rayonnement électromagnétique térahertz à large bande passant à travers le plan principal x/y du composant (12) dans un autre emplacement donné dans le plan principal x/y du composant (12).

4. Procédé non destructif (100 ; 200) selon l'une quelconque des revendications 1 ou 2, selon lequel le pas dans la direction y est égal ou supérieur à 20 µm et est égal ou inférieur à 100 µm.

5. Procédé non destructif (100 ; 200) selon l'une quelconque des revendications 1 à 4, comprenant la mesure des coordonnées x, y, z d'une surface du composant (12), le stockage de ces coordonnées de façon à maintenir une distance constante entre la surface du composant (12) et la microsonde (26).

6. Procédé non destructif (100 ; 200) selon l'une quelconque des revendications 1 à 5, selon lequel la comparaison du rayonnement électromagnétique térahertz à large bande mesuré en fonction du temps dans la base de données de rayonnements électromagnétiques térahertz à large bande en fonction de temps comprend la comparaison d'une valeur de retard temporel d'une amplitude de signal donnée des rayonnements électromagnétiques térahertz à large bande en fonction du temps.

7. Procédé non destructif (100 ; 200) selon l'une quelconque des revendications 1 à 6, selon lequel le paramètre indicatif de la teneur en carbone comprend en outre un nombre de fibres de carbone.

8. Procédé non destructif (100 ; 200) selon l'une quelconque des revendications 1 à 7, comprenant la construction d'une carte des valeurs récupérées du paramètre indicatif de la teneur en carbone en fonction des emplacements donnés du composant (12).

9. Procédé non destructif (100 ; 200) selon la revendication 8, comprenant l'application de règles de simplification sur la carte des valeurs récupérées du paramètre indicatif de la teneur en carbone, de façon à obtenir une carte simplifiée des valeurs récupérées du paramètre indicatif de la teneur en carbone.

10. Procédé non destructif (100 ; 200) selon l'une quelconque des revendications 1 à 9, comprenant la construction de la base de données par :
- corrélation des rayonnements électromagnétiques térahertz à large bande mesurés en fonction du temps avec une valeur mesurée d'un paramètre sur des images de microscopie en coupe d'une première pluralité d'échantillons ;
- le stockage dans la base de données des valeurs mesurées du paramètre comme une fonction des rayonnements électromagnétiques térahertz à large bande mesurés en fonction du temps.

11. Procédé non destructif (100 ; 200) selon la revendication 10, comprenant l'amélioration de la base de données par :
- comparaison d'une carte générée des valeurs récupérées du paramètre indicatif de la teneur en carbone avec des valeurs mesurées du paramètre sur des images de microscopie en coupe d'une deuxième pluralité d'échantillons ;
- stockage dans la base de données des valeurs mesurées du paramètre comme une fonction des rayonnements électromagnétiques térahertz à large bande mesurés en fonction du temps ; et
- répétition des deux étapes précédentes jusqu'à ce qu'un écart entre la carte générée des valeurs récupérées du paramètre indicatif de la teneur en carbone et les valeurs mesurées du paramètre sur des images de microscopie en coupe de la deuxième pluralité d'échantillons soit égal ou inférieur à 15% dans chaque emplacement donné.

12. Procédé non destructif (100 ; 200) selon la revendication 10 ou 11, selon lequel le paramètre mesuré sur des images de microscopie en coupe est un nombre de fibres, une quantité totale de fibre en % du volume, une quantité de résine en % du volume.

13. Procédé non destructif (100 ; 200) selon la revendication 8 ou 9 en combinaison avec la revendication 7, selon lequel la carte est obtenue pour une bobine complète du composite intermédiaire unidirectionnel ayant des fibres de carbone continues unidirectionnelles incorporées dans une matrice de résine thermoplastique ou thermodurcissable, l'information liée à la carte étant stockée dans un dispositif situé sur la bobine et/ou sur le composant (12).

14. Procédé de détermination d'une pluralité de valeurs d'une propriété physique d'un composant, pour un processus de fabrication d'une partie composite avec le composant (12), le composant (12) comprenant des fibres de carbone continues unidirectionnelles ayant un plan principal x/y, les fibres de carbone continues étant orientées le long de l'axe x, le composant étant un composite intermédiaire unidirectionnel ayant des fibres de carbone continues unidirectionnelles incorporées dans une matrice de résine thermoplastique ou thermodurcissable et un procédé de simulation utilisant la carte de valeurs récupérées d'un paramètre indicatif de la teneur en carbone selon la revendication 8 ou 9 et une pluralité de paramètres du processus de fabrication pour déterminer la valeur de la propriété physique du composant (12) à la fin du processus de fabrication dans un emplacement donné du composant, chaque valeur étant comparée à une valeur de seuil et un signal d'alarme étant retourné quand la valeur de seuil est atteinte.

15. Procédé de détermination d'une propriété physique d'un matériau composite ou d'une partie composite fabriqué à partir d'un composant (12) comprenant des fibres de carbone continues unidirectionnelles ayant un plan principal x/y, les fibres de carbone continues étant orientées le long de l'axe x, le composant étant un composite intermédiaire unidirectionnel ayant des fibres de carbone continues unidirectionnelles incorporées dans une matrice de résine thermoplastique ou thermodurcissable, le procédé comprenant la construction d'une carte de valeurs récupérées d'un paramètre indicatif d'une teneur en carbone selon la revendication 8 ou 9, la propriété physique dépendant du paramètre indicatif d'une teneur en carbone.
